# EUROPÄISCHE PATENTSCHRIFT

(11) **EP 1 936 220 B1**
(45) Veröffentlichungstag und Bekanntmachung des Hinweises auf die Patenterteilung: **11.07.2012**
(21) Anmeldenummer: 07022377.1
(22) Anmeldetag: 19.11.2007
(51) Int. Cl.: F16D 13/52, F16D 13/58, F16D 21/06, F16D 13/72

(54) **Drehmomentübertragungseinrichtung**
Torque transmission device
Dispositif de transmission de couple

(30) Priorität: 18.12.2006 DE 102006059669
(43) Veröffentlichungstag der Anmeldung: 25.06.2008
(73) Patentinhaber: Schaeffler Technologies AG & Co. KG, 91074 Herzogenaurach (DE)
(72) Erfinder: Agner, Ivo, 77815 Bühl (DE); Izso, Gabor, 77815 Bühl (DE); Nöhl, Oliver, 77830 Bühlertal (DE)

(56) Entgegenhaltungen:
- EP-A1- 1 610 016
- EP-A1- 1 610 017
- EP-A2- 1 482 195
- WO-A1-2007/112722

## Beschreibung

Die Erfindung betrifft eine Drehmomentübertragungseinrichtung, insbesondere im Antriebsstrang eines Kraftfahrzeugs zur Drehmomentübertragung zwischen einer Antriebseinheit, insbesondere einer Brennkraftmaschine, und einem Getriebe, mit mindestens einer Lamellenkupplung, insbesondere einer Doppellamellenkupplung, die mindestens ein Lamellenpaket umfasst, das Außenlamellen, die drehfest mit einem Außenlamellenträger verbunden sind, und Innenlamellen umfasst, die drehfest mit einem Innenfamellenträder verbunden sind, und mit mindestens einer Betätigungshebeleinrichtüng zur Betätigung der Lamellenkupplung, wobei sich eine Druckübertragungseinrichtung zwischen dem Lamellenpaket und der Betätigungshebeleinrichtung durch mindestens ein Durchgangsloch hindurch erstreckt, das in einer Trageinrichtung ausgespart ist.

Eine solche Drehmomentübertragungseinrichtung ist aus der EP 1 610 017 A1 bekannt.

Aufgabe der Erfindung ist es, eine Drehmomentübertragungseinrichtung zu schaffen, die einfach aufgebaut und kostengünstig herstellbar ist, und bei der die Kühlung des Lamellenpakets verbessert ist.

Die Aufgabe ist bei einer Drehmomentübertragungseinrichtung gemäß dem Patentanspruch 1 gelöst ist. Hierbei ist zwischen dem Innenlamellenträger und dem Durchgangsloch eine Dichteinrichtung angeordnet. Durch die Dichteinrichtung kann eine im Betrieb der Drehmomentübertragungseinrichtung auftretende Leckage von Kühlmedium durch das Durchgangsloch deutlich reduziert werden. Die Trageinrichtung dient vorzugsweise dazu, den Außenlamellenträger der Lamellenkupplung mit einem weiteren Außenlamellenträger einer weiteren Lamellenkupplung drehfest zu verbinden, die radial innerhalb der erstgenannten Lamellenkupplung angeordnet ist.

Ein bevorzugtes Ausführungsbeispiel der Drehmomentübertragungseinrichtung ist dadurch gekennzeichnet, dass die Dichteinrichtung einen Dichtring umfasst, der eine Schnittstelle zwischen dem Innenlamellenträger und dem Lamellenpaket in radialer Richtung überlappt. Dadurch wird ein unerwünschtes Ausströmen von Kühlmedium in axialer Richtung durch die Durchgangslöcher in der Trageinrichtung verhindert.

Ein weiteres bevorzugtes Ausführungsbeispiel der Drehmomentübertragungseinrichtung ist dadurch gekennzeichnet, dass der Dichtring, zumindest teilweise, einen im Wesentlichen L-förmigen, U-förmigen oder C-förmigen Querschnitt aufweist. Vorzugsweise ist der C-förmige, U-förmige oder L-förmige Querschnitt zu dem Lamellenpaket hin geöffnet.

Ein weiteres bevorzugtes Ausführungsbeispiel der Drehmomentübertragungseinrichtung ist dadurch gekennzeichnet, dass der Dichtring, im Querschnitt betrachtet, einen Schenkel aufweist, der in radialer Richtung zwischen dem Druckring und einem beziehungsweise dem Außenlamellenträger einer beziehungsweise der zweiten Lamellenkupplung angeordnet ist, die radial innerhalb der ersten Lamellenkupplung angeordnet ist. Dadurch wird der Dichtring in radialer Richtung positioniert.

Ein weiteres bevorzugtes Ausführungsbeispiel der Drehmomentübertragungseinrichtung ist dadurch gekennzeichnet, dass der Dichtring, im Querschnitt betrachtet, einen Schenkel aufweist, der in axialer Richtung versetzt zu und radial außerhalb von dem Innenlamellenträger angeordnet ist. Dadurch wird das Kühlmedium zwischen den Außenlamellenträger und das zugehörige Lamellenpaket geleitet.

Ein weiteres bevorzugtes Ausführungsbeispiel der Drehmomentübertragungseinrichtung ist dadurch gekennzeichnet, dass das Ende des Schenkels zwischen dem Innenlamellenträger und einer zugehörigen Lamelle angeordnet ist. Bei der Lamelle handelt es sich vorzugsweise um eine Endlamelle.

Ein weiteres bevorzugtes Ausführungsbeispiel der Drehmomentübertragungseinrichtung ist dadurch gekennzeichnet, dass der Dichtring, im Querschnitt betrachtet, einen weiteren Schenkel aufweist, der in axialer Richtung versetzt zu und radial innerhalb von dem Innenlamellenträger angeordnet ist. Dadurch wird ein Entweichen von Kühlmedium in axialer Richtung sicher verhindert.

Ein weiteres bevorzugtes Ausführungsbeispiel der Drehmomentübertragungseinrichtung ist dadurch gekennzeichnet, dass die Dichteinrichtung als Transportsicherung ausgeführt ist. Gemäß einem weiteren Aspekt der Erfindung verhindert die Dichteinrichtung, dass sich Lamellen des Lamellenpakets von dem zugehörigen Lamellenträger lösen.

Ein weiteres bevorzugtes Ausführungsbeispiel der Drehmomentübertragungseinrichtung ist dadurch gekennzeichnet, dass die Dichteinrichtung eine Einbausicherung umfasst. Gemäß einem weiteren Aspekt der Erfindung ist die Dichteinrichtung so ausgeführt, zum Beispiel vorgespannt, dass ein unerwünschtes Lösen der Dichteinrichtung nach deren Einbau verhindert wird.

Ein weiteres bevorzugtes Ausführungsbeispiel der Drehmomentübertragungseinrichtung ist dadurch gekennzeichnet, dass die Einbausicherung eine Rasteinrichtung umfasst, die ein Einrasten der Dichteinrichtung bei deren Einbau bewirkt. Dadurch wird auf einfache Art und Weise eine Fixierung der Dichteinrichtung im eingebauten Zustand ermöglicht.

Ein weiteres bevorzugtes Ausführungsbeispiel der Drehmomentübertragungseinrichtung ist dadurch gekennzeichnet, dass die Einbausicherung als Bajonettverschluss ausgeführt ist. Gemäß einem weiteren Aspekt der Erfindung wird die Dichteinrichtung zunächst in axialer Richtung eingesteckt und dann verdreht, um die Dichteinrichtung und weitere Teile einbausicher zu fixieren beziehungsweise zu positionieren.

Ein weiteres bevorzugtes Ausführungsbeispiel der Drehmomentübertragungseinrichtung ist dadurch gekennzeichnet, dass die Dichteinrichtung, insbesondere der Dichtring, mindestens eine Nase, einen Haken und/oder einen Schenkel aufweist, die beziehungsweise der sich, zumindest teilweise, radial nach innen erstreckt und in eine Vertiefung, ein Durchgangsloch oder eine Nut eingreift, die beziehungsweise das in einem beziehungsweise dem Außenlamellenträger einer beziehungsweise der zweiten Lamellenkupplung vorgesehen ist, die radial innerhalb der ersten Lamellenkupplung angeordnet ist. Dadurch wird zum Beispiel ein Bajonettverschluss der Dichteinrichtung ermöglicht.

Ein weiteres bevorzugtes Ausführungsbeispiel der Drehmomentübertragungseinrichtung ist dadurch gekennzeichnet, dass die Nase, der Haken oder Schenkel federnd vorgespannt ist. Dadurch kann ein unerwünschtes Spiel, das Klappergeräusche hervorrufen könnte, verhindert werden.

Ein weiteres bevorzugtes Ausführungsbeispiel der Drehmomentübertragungseinrichtung ist dadurch gekennzeichnet, dass der Dichtring federnd vorgespannt ist. Durch die Vorspannung kann der Dichtring zentriert werden.

Ein weiteres bevorzugtes Ausführungsbeispiel der Drehmomentübertragungseinrichtung ist dadurch gekennzeichnet, dass die Dichteinrichtung so ausgeführt ist, dass durch die Dichteinrichtung die Öffnungsbewegung der Lamellenkupplung unterstützt wird. Gemäß einem weiteren Aspekt der Erfindung wird zu diesem Zweck die Vorspannung der Dichteinrichtung oder von Teilen der Dichteinrichtung genutzt.

Ein weiteres bevorzugtes Ausführungsbeispiel der Drehmomentübertragungseinrichtung ist dadurch gekennzeichnet, dass die Dichteinrichtung so ausgeführt ist, dass die Dichteinrichtung ihre Dichtfunktion nur dann ausübt, wenn die Lamellenkupplung geschlossen ist. Wenn die Lamellenkupplung geöffnet ist, kann ein Spalt zwischen der Dichteinrichtung und einem weiteren Teil auftreten.

Ein weiteres bevorzugtes Ausführungsbeispiel der Drehmomentübertragungseinrichtung ist dadurch gekennzeichnet, dass die Dichteinrichtung aus Blech gestanzt und/oder geformt ist. Dadurch können die Herstellkosten reduziert werden.

Ein weiteres bevorzugtes Ausführungsbeispiel der Drehmomentübertragungseinrichtung ist dadurch gekennzeichnet, dass die Dichteinrichtung aus Kunststoff gebildet ist. Vorzugsweise ist die Dichteinrichtung als Spritzgießteil ausgeführt.

Ein weiteres bevorzugtes Ausführungsbeispiel der Drehmomentübertragungseinrichtung ist dadurch gekennzeichnet, dass die Dichteinrichtung mindestens einen Schnapphaken aufweist, der in eine Öffnung der Trageinrichtung eingreift. Dadurch wird auf einfache Art und Weise eine Fixierung der Dichteinrichtung an der Trageinrichtung ermöglicht. Vorzugsweise sind mehrere Schnapphaken an der Dichteinrichtung ausgebildet.

Ein weiteres bevorzugtes Ausführungsbeispiel der Drehmomentübertragungseinrichtung ist dadurch gekennzeichnet, dass der Druckring Zentriermittel umfasst. Dadurch wird die Zentrierung des Druckrings beim Einbau vereinfacht.

Ein weiteres bevorzugtes Ausführungsbeispiel der Drehmomentübertragungseinrichtung ist dadurch gekennzeichnet, dass der Druckring, insbesondere radial innen, Nasen mit Seitenflächen aufweist, die dazu dienen, den Druckring zu zentrieren. Die Seitenflächen wirken vorzugsweise mit einer Verzahnung zusammen.

Ein weiteres bevorzugtes Ausführungsbeispiel der Drehmomentübertragungseinrichtung ist dadurch gekennzeichnet, dass der Druckring, insbesondere radial außen, Zähne mit Flanken aufweist, die dazu dienen, den Druckring zu zentrieren. Die Zähne mit den Flanken wirken mit einer weiteren Verzahnung zusammen.

Ein weiteres bevorzugtes Ausführungsbeispiel der Drehmomentübertragungseinrichtung ist dadurch gekennzeichnet, dass der Druckring, vorzugsweise radial außen, einen umgebogenen Randbereich aufweist. Der umgebogene Randbereich dient zum Beispiel zur Steifigkeitserhöhung. Alternativ oder zusätzlich kann der umgebogene Randbereich aber auch zur Zentrierung dienen.

Die Erfindung betrifft des Weiteren einen Antriebsstrang eines Kraftfahrzeugs mit einer vorab beschriebenen Drehmomentübertragungseinrichtung.

Weitere Vorteile, Merkmale und Einzelheiten der Erfindung ergeben sich aus der nachfolgenden Beschreibung, in der unter Bezugnahme auf die Zeichnung verschiedene Ausführungsbeispiele im Einzelnen beschrieben sind. Es zeigen:
- Figur 1: die Darstellung eines Teilschnitts in Längsrichtung durch eine herkömmliche Drehmomentübertragungseinrichtung;
- Figur 2: eine ähnliche Darstellung wie in Figur 1 gemäß einem Ausführungsbeispiel;
- Figur 3: einen vergrößerten Ausschnitt einer Drehmomentübertragungseinrichtung, wie sie in Figur 2 dargestellte ist, im Längsschnitt;
- Figur 4: eine ähnliche Darstellung wie in Figur 2 gemäß einem weiteren Ausführungsbei- spiel;
- Figur 5: eine perspektivische Darstellung einer erfindungsgemäßen Dichteinrichtung;
- Figur 6: einen vergrößerten Ausschnitt aus Figur 5;
- Figur 7: eine perspektivische Darstellung eines erfindungsgemäßen Druckrings;
- Figur 8: einen vergrößerten Ausschnitt aus Figur 7;
- Figur 9: einen ähnlichen Druckring wie in Figur 7 gemäß einem weiteren Ausführungsbei- spiel;
- Figur 10: einen vergrößerten Ausschnitt aus Figur 9;
- Figur 11 1: eine ähnliche Darstellung wie in Figur 2 gemäß einem weiteren Ausführungsbei- spiel;
- Figur 12: einen Ausschnitt aus Figur 11 bei geschlossener Kupplung;
- Figur 13: eine ähnliche Darstellung wie in Figur 11 gemäß einem weiteren Ausführungsbei- spiel;
- Figur 14: eine ähnliche Darstellung wie in Figur 13 gemäß einem weiteren Ausführungsbei- spiel;
- Figuren 15 bis 20: den Zusammenbau einer erfindungsgemäßen Drehmomentübertragungsein- richtung mit Bajonettverschluss;
- Figur 21: eine perspektivische Darstellung einer Dichteinrichtung gemäß einem weiteren Ausführungsbeispiel;
- Figur 22: einen vergrößerten Ausschnitt aus Figur 21;
- Figur 23: den gleichen Ausschnitt wie in Figur 22 gemäß einem weiteren Ausführungsbei- spiel;
- Figur 24: eine perspektivische Darstellung eines Druckrings gemäß einem weiteren Ausführungsbeispiel;
- Figur 25: einen vergrößerten Ausschnitt aus Figur 24;
- Figur 26: den gleichen Ausschnitt wie in Figur 25 gemäß einem weiteren Ausführungsbei- spiel;
- Figur 27: eine ähnliche Darstellung wie in Figur 2 gemäß einem weiteren Ausführungsbei- spiel;
- Figur 28: einen vergrößerten Ausschnitt aus Figur 27;
- Figur 29: eine perspektivische Darstellung der Dichtungseinrichtung aus den Figuren 27 und 28;
- Figur 30: einen vergrößerten Ausschnitt aus Figur 29;
- Figur 31: eine perspektivische Darstellung einer vorliegenden Drehmomentübertra- gung- seinrichtung;
- Figur 32: eine Explosionsdarstellung der Drehmomentübertragungseinrichtung aus Figur 31;
- Figur 33: einen vergrößerten Ausschnitt aus Figur 32 und
- Figur 34: einen ähnlichen Ausschnitt wie in Figur 33 in der Draufsicht gemäß einem weiteren Ausführungsbeispiel.

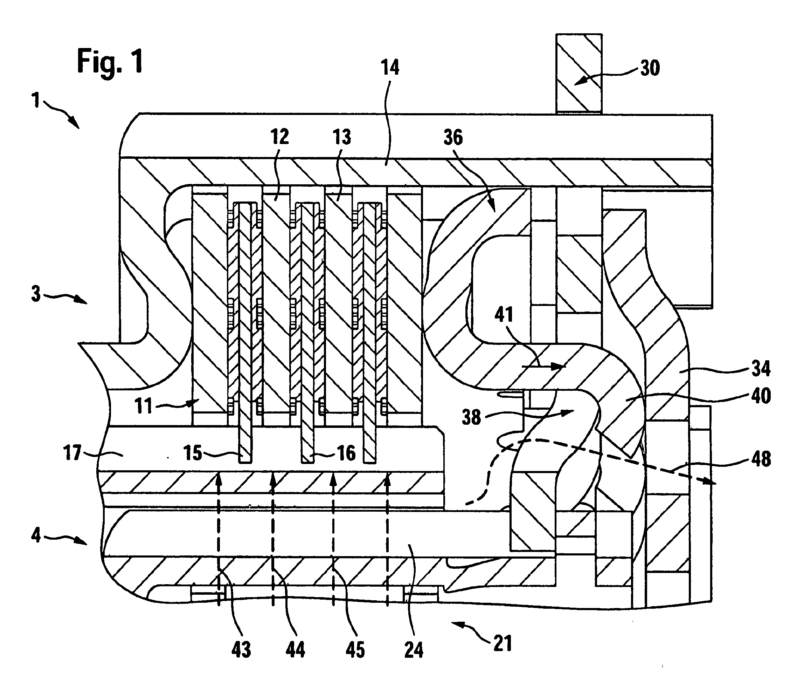

In den Figuren 1, 2, 3, 4, 11, 12, 13, 14, 27, 28 ist jeweils ein Teil eines Antriebsstrangs eines Kraftfahrzeugs in verschiedenen Ansichten dargestellt. Zwischen einer Antriebseinheit, insbesondere einer Brennkraftmaschine, von der eine Kurbelwelle ausgeht, und einem Getriebe ist eine nasslaufende Doppelkupplung 1 in Lamellenbauweise angeordnet.

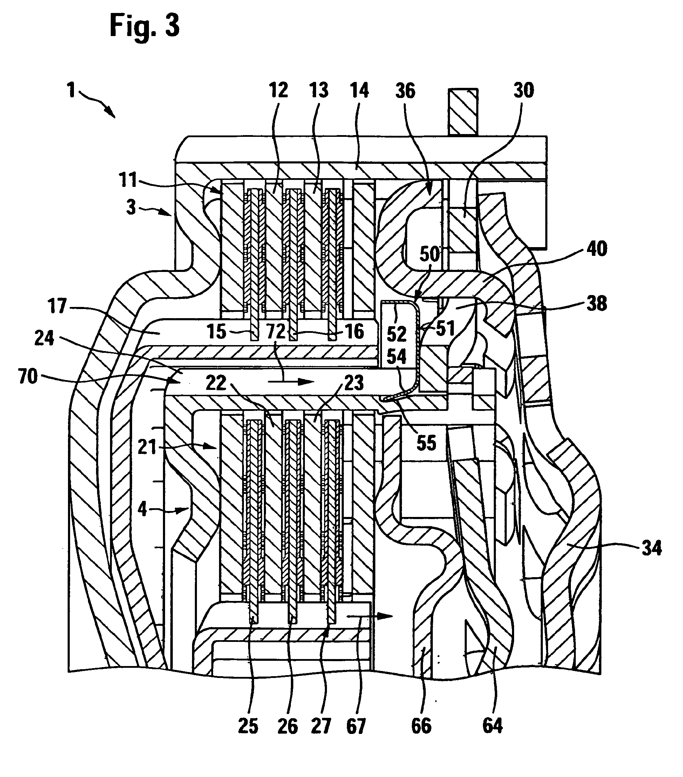

Die Doppelkupplung 1 umfasst eine radial äußere Lamellenkupplung 3 und eine radial innere Lamellenkupplung 4, die in axialer Richtung überlappend zu der radial äußeren Lamellenkupplung 3 angeordnet ist. Die radial äußere Lamellenkupplung 3 umfasst ein Lamellenpaket 11 mit Außenlamellen 12, 13, die drehfest mit einem Außenlamellenträger 14 verbunden sind. Das Lamellenpaket umfasst des Weiteren Innenlamellen 15, 16, die drehfest mit einem Innenlamellenträger 17 verbunden sind. Die radial innere Lamellenkupplung 4 umfasst ein Lamellenpaket 21, das, wie man bei dem in Figur 3 dargestellten Ausführungsbeispiel sieht, Außenlamellen 22, 23 umfasst, die drehfest mit einem Außenlamellenträger 24 verbunden sind. Das Lamellenpaket 21 umfasst des Weiteren Innenlamellen 25, 26, die drehfest mit einem Innenlamellenträger 27 verbunden sind.

Der Außenlamellenträger 14, der auch als äußerer Lamellenträger bezeichnet wird, der radial äußeren Lamellenkupplung 3 ist durch ein Verbindungsteil 30 drehfest mit dem Außenlamellenträger 24, der auch als äußerer Lamellenträger bezeichnet wird, der radial inneren Lamellenkupplung 4 verbunden. Das Verbindungsteil 30, das auch als Trageinrichtung bezeichnet wird, ist im Wesentlichen ringartig ausgebildet und wird daher auch als Tragring bezeichnet. Die Lamellenkupplung 3 wird durch eine Betätigungshebeleinrichtung 34 betätigt. Die Betätigungseinrichtung 34 ist unter Zwischenschaltung einer Druckübertragungseinrichtung 36 mit dem Lamellenpaket 11 gekoppelt. Die Druckübertragungseinrichtung 36 ist im Wesentlichen ringartig ausgebildet und wird daher auch als Druckring 36 bezeichnet. Der Druckring 36 ist in axialer Richtung zwischen dem Lamellenpaket 11 und der Betätigungshebeleinrichtung 34 eingespannt.

Der Druckring 36 weist mehrere sich zumindest teilweise in axialer Richtung erstreckende Finger 40 auf, die sich, wie durch einen Pfeil 41 angedeutet ist, durch Durchgangslöcher 38 erstrecken, die in dem Verbindungsteil 30 ausgespart sind. Die Durchgangslöcher 38 werden auch als Fingerfenster bezeichnet. Durch Pfeile 43 bis 45 ist angedeutet, dass ein Kühlmedium in radialer Richtung durch die Lamellenpakete 11, 21 hindurchgeführt wird, um die Lamellen zu kühlen.

Eine Nasskupplung nutzt ein spezielles Kühlmedium, wie Kühlöl, um die im Betrieb an den Lamellen entstehende Wärme abzuführen. Das Medium muss aus einem Kühlkreislauf zu den Lamellen geleitet werden. An so genannten Reiblamellen sind Reibbeläge angebracht. Zur Belagkühlung strömt das Kühlöl zwischen Stahllamellen und Reiblamellen hindurch, wobei ein Temperaturaustausch stattfinden kann. Nuten in den Belägen leiten das Öl von der radial inneren Lamellenkupplung 4 radial nach außen zu der radial äußeren Lamellenkupplung 3. Nach dem Kühlen der Lamellen der beiden Lamellenpakete 11, 21 vermischt sich das Kühlmedium mit dem Öl im Getriebesumpf. Von hier wird es zum Kühler und von dort wieder in die Kupplung gepumpt.

In Figur 1 ist durch einen Pfeil 48 angedeutet, dass ein Teil des Kühlmediums durch die Durchgangslöcher oder Fingerfenster 38 in axialer Richtung nach außen entweicht. Das führt zu einer schlechten Pumpeneffizienz und Ölverteilung. Gemäß einem wesentlichen Aspekt der Erfindung werden die Durchgangslöcher 38 oder Fingerfenster durch eine Dichtungseinrichtung oder Dichteinrichtung beziehungsweise ein Dichtungsteil abgedichtet. Vorzugsweise wirkt das Dichtungsteil beziehungsweise die Dichteinrichtung mit dem Druckring zusammen.

Durch die erfindungsgemäße Konstruktion kann ein eventuell vorhandener Leckagespalt minimiert und die Kühlung optimiert werden. Gemäß einem wesentlichen Aspekt der Erfindung werden die Durchgangslöcher oder Fingerfenster 38 durch die Dichtungseinrichtung, zumindest teilweise geschlossen. Dadurch kann die Leckage deutlich reduziert werden. Das wiederum führt dazu, dass eine schwächere oder kleinere Pumpe verwendet werden kann, was sich positiv auf den Kraftstoffverbrauch auswirkt.

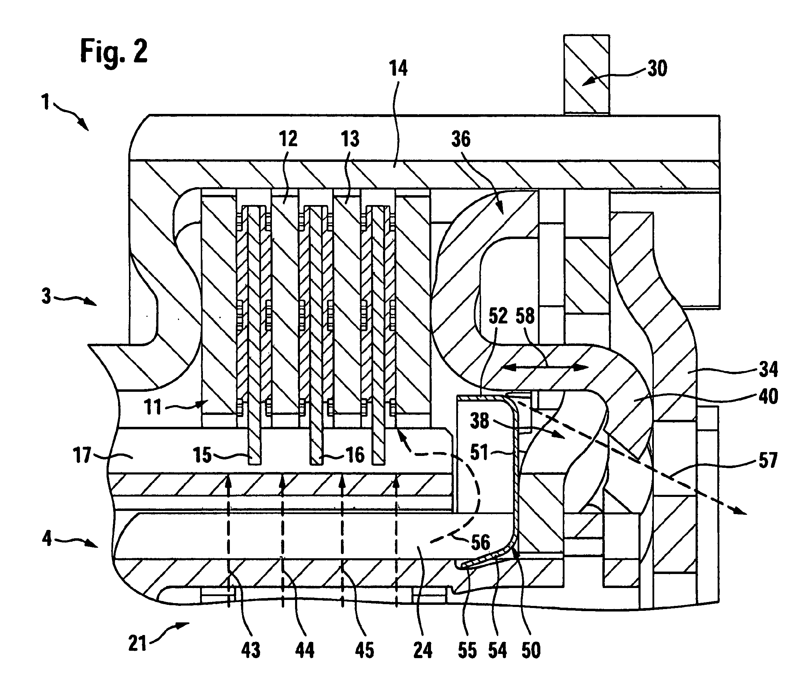

Bei dem in Figur 2 dargestellten Ausführungsbeispiel ist im Bereich der Durchgangslöcher 38 eine Dichteinrichtung 50 angeordnet. Die Dichteinrichtung 50 umfasst einen Dichtring 51, der im Wesentlichen die Gestalt einer Kreisringscheibe aufweist. Radial außen weist der Dichtring 51 einen abgewinkelten Schenkel 52 auf. Radial innen weist der Dichtring 51 Nasen oder Finger 54 auf, die in eine Nut oder Nuten 55 eingreift beziehungsweise eingreifen, die in dem Außenlamellenträger 24 ausgespart ist beziehungsweise sind. Durch einen Pfeil 56 ist angedeutet, dass der Hauptteil des Kühlmediums von dem radial inneren Lamellenpaket 21 zu dem radial äußeren Lamellenpaket 11 gelangt. Durch einen weiteren Pfeil 57 ist angedeutet, dass nur eine geringe Leckage durch die Fingerfenster 38 entweicht. Durch einen Doppelpfeil 58 ist angedeutet, dass sich der Druckring 36 bei einer Betätigung der Lamellenkupplung 3 in axialer Richtung bewegt.

In Figur 3 sieht man, dass die radial innere Lamellenkupplung 4 mit Hilfe einer Betätigungshebeleinrichtung 64 betätigt wird. Zwischen der Betätigungshebeleinrichtung 64 und dem Lamellenpaket 21 ist eine Druckübertragungseinrichtung 66 eingeklemmt. Bei der Druckübertragungseinrichtung 66 handelt es sich um einen geschlossenen Druckring. Durch einen durchkreuzten Pfeil 67 ist angedeutet, dass durch den geschlossenen Druckring 66 kein Kühlmedium entweichen kann. Der Außenlamellenträger 24 ist mit einer Außenverzahnung 70 versehen, die ein Entweichen von Öl in axialer Richtung ermöglichen würde. Durch einen durchkreuzten Pfeil 72 ist angedeutet, dass die Dichteinrichtung 50 ein Entweichen von Kühlmedium in axialer Richtung durch die Durchgangslöcher 38 sicher verhindert.

Bei einer Doppelkupplung, wie sie in Figur 3 dargestellt ist, kann es problematisch sein, dass der äußere Lamellenträger 24 in axialer Richtung nur auf einer Seite abgestützt ist. Beim Transport könnte es passieren, dass der äußere Lamellenträger 24 und andere Teile der Doppelkupplung sich axial verschieben. Das könnte dazu führen, dass die Lamellen des Lamellenpakets 21 der radial inneren Lamellenkupplung 4 in axialer Richtung herausfallen könnten.

Gemäß einem wesentlichen Aspekt der Erfindung wird eine Transportsicherungsfunktion in die Dichteinrichtung 50 integriert, die auch als Dichtungsteil bezeichnet wird. Durch die in die Nuten 55 des Lamellenträgers 24 eingreifenden Nasen oder Finger 54 der Dichteinrichtung 50 wird der Außenlamellenträger 24 sicher in Position gehalten. Als Alternative zu den Nuten können ausgestellte Haken oder Löcher vorgesehen werden. Durch die erfindungsgemäße Transportsicherung wird eine unerwünschte axiale Verschiebung der Teile sicher verhindert. Die Dichteinrichtung 50 ist aus einem Blechteil gestanzt und geformt.

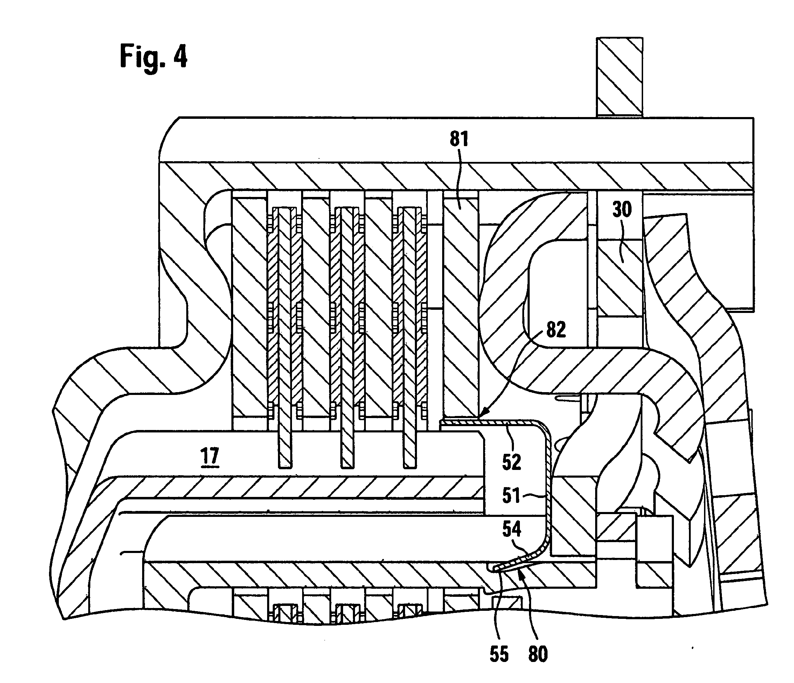

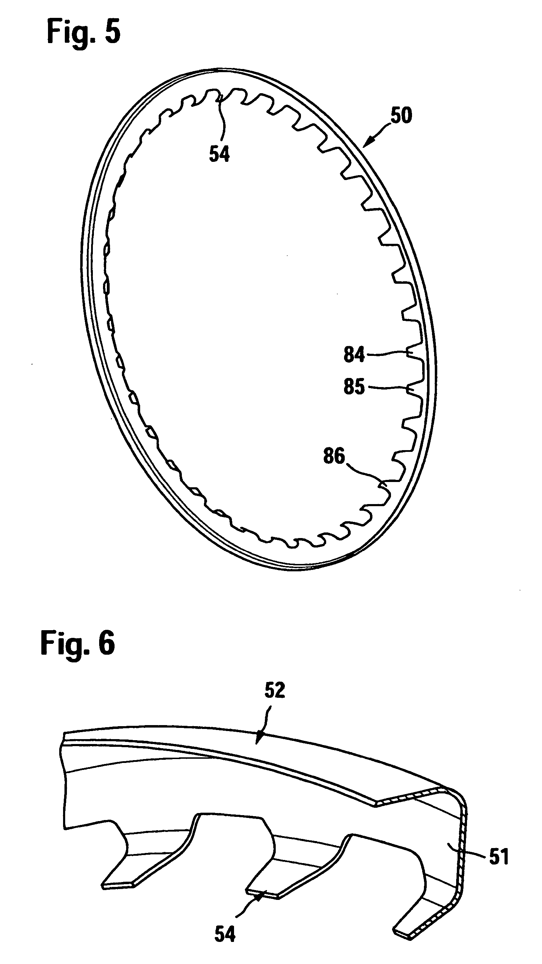

Bei dem in Figur 4 dargestellten Ausführungsbeispiel ist eine Dichteinrichtung 80 eingebaut, die der Dichteinrichtung 50 des vorangegangenen Ausführungsbeispiels ähnelt. Allerdings ist bei dem in Figur 4 dargestellten Ausführungsbeispiel das Ende des Schenkels 52 in radialer Richtung zwischen dem Innenlamellenträger 17 und einer Endlamelle 81 angeordnet. Dadurch wird auf einfache Art und Weise eine Dichtstelle 82 geschaffen. In Figur 5 ist Dichteinrichtung 50 perspektivisch dargestellt. In Figur 5 sieht man, dass die Dichteinrichtung 50 eine Vielzahl von Nasen oder Fingern 54, 84, 85, 86 aufweist. Der abgewinkelte Schenkel 52 stellt eine Dichtfläche 52 dar. In Figur 6 ist ein vergrößerter Ausschnitt aus Figur 5 dargestellt.

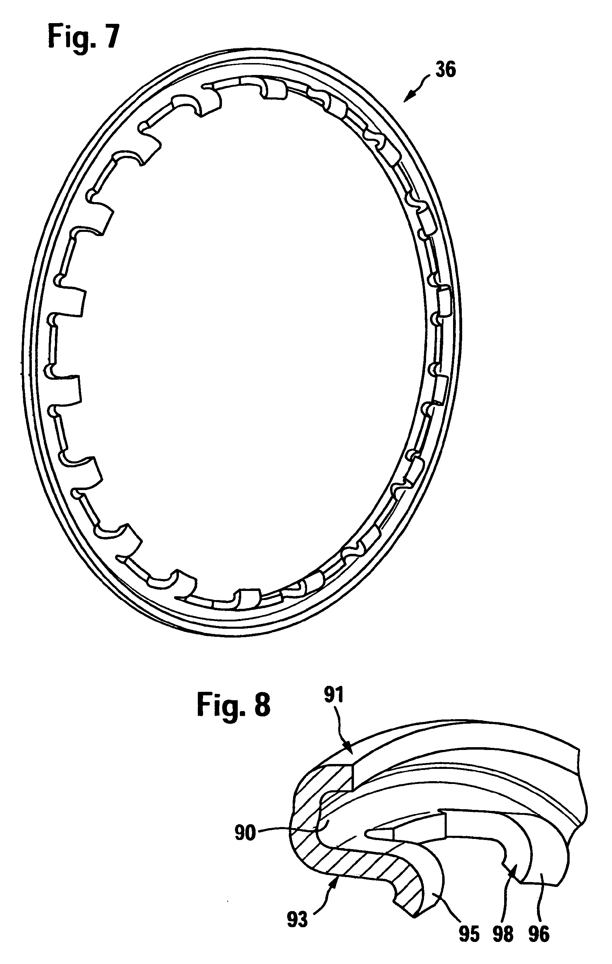

In den Figuren 7 und 8 ist der Druckring 36 perspektivisch dargestellt. Der Druckring 36 umfasst einen Ringkörper 90, der einen umgebogenen Randbereich 91 aufweist. Der Druckring 36 kann aus Stahl geformt werden. Der umgebogene Randbereich 91 schafft eine Zentrierfläche. Eine Dichtfläche 93 wird durch einen weiteren umgebogenen Randbereich geschaffen, so dass der Druckring 36 einen C-förmigen oder U-förmigen Querschnitt aufweist. Der Druckring 36 weist eine Vielzahl von gekrümmten Fingern 95, 96 auf. Die Finger 95, 96 können Zentrierflächen 98 oder Zentrierflanken aufweisen, die zur Flankenzentrierung verwendet werden können. Durch die zurückgeformten Randbereiche wird die Steifigkeit des Druckrings 36 erhöht.

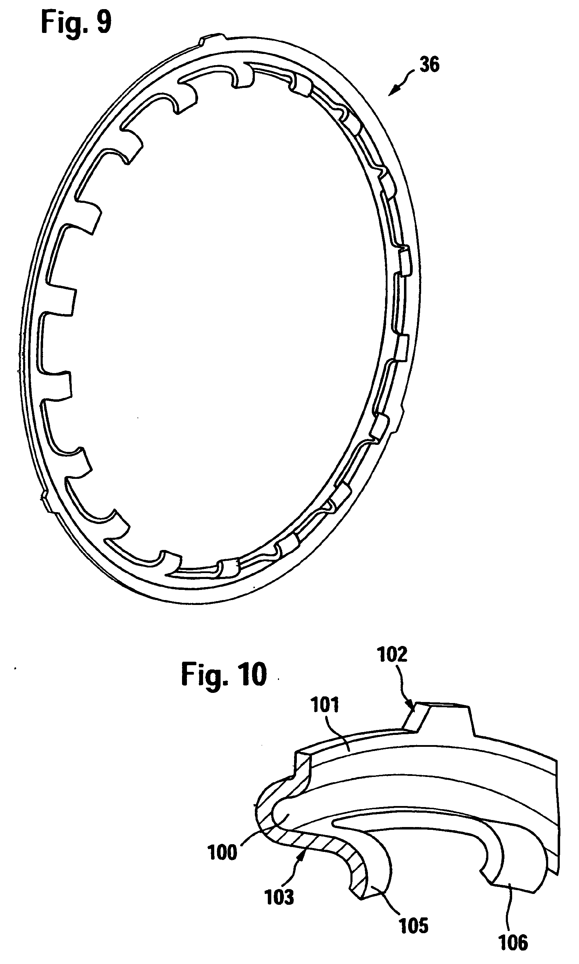

In den Figuren 9 und 10 ist eine weitere Variante des Druckrings 36 dargestellt. Der in den Figuren 9 und 10 dargestellte Druckring 36 umfasst einen Ringkörper 100 mit einem umgebogenen oder zurückgeformten Randbereich 101. Radial außen sind an dem Randbereich 101 Zähne 102 ausgebildet, deren Flanken nach außen zusammenlaufen. Die Zähne 102 dienen dazu, den Druckring 36 zu zentrieren. Mit 103 ist die Dichtungsfläche des Druckrings 36 bezeichnet. Des Weiteren weist der Druckring 36 eine Vielzahl von gekrümmten Fingern 105, 106 auf.

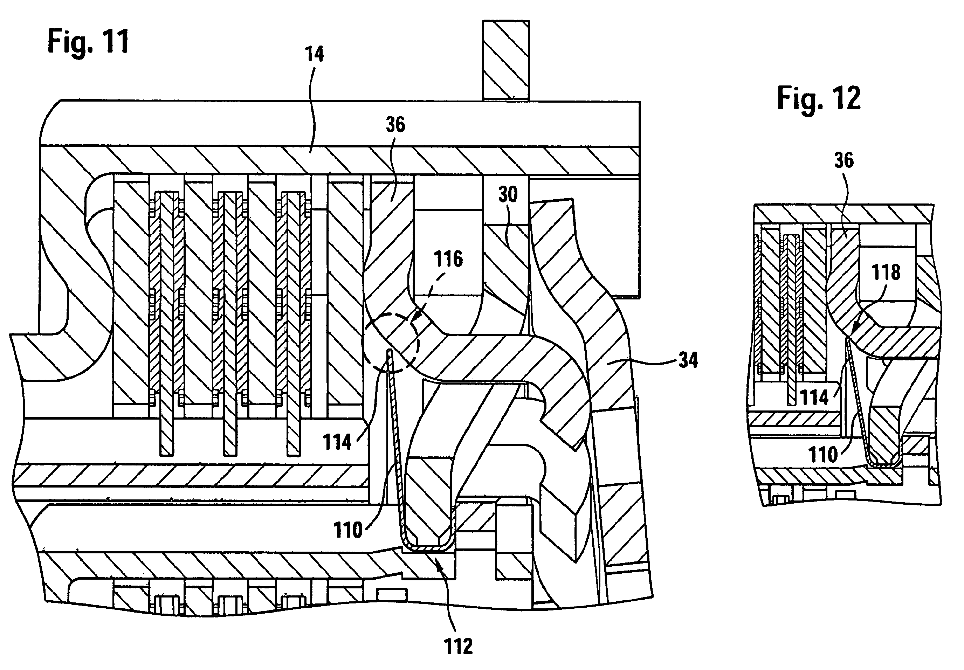

Gemäß einem weiteren Aspekt der Erfindung ist die Dichteinrichtung als Feder ausgeführt. Zu diesem Zweck kann das Dichtungsteil beziehungsweise die Dichteinrichtung aus einem Blech, insbesondere einem Federblech, gestanzt und geformt werden. In den Figuren 11 und 12 ist eine nasslaufende Doppelkupplung mit einer Dichteinrichtung 110 dargestellt. Die Dichteinrichtung 110 umfasst, im Querschnitt betrachtet, einen U-förmigen Positionierabschnitt 112, der sich um den radial inneren Randbereich des Tragrings 30 herum erstreckt. Durch einen Kreis 116 ist hervorgehoben, dass in dem in Figur 11 dargestellten geöffneten Zustand der Kupplung ein Spalt zwischen dem freien Ende 114 der Dichteinrichtung 110 und dem Druckring 36 vorhanden ist.

In Figur 12 ist der geschlossene Zustand der Kupplung dargestellt. Wie man sieht, ist der Spalt bei geschlossener Kupplung an einer Stelle 118 geschlossen. Das heißt, durch die Federwirkung der Dichteinrichtung 110 wird diese bei der Bewegung des Druckrings 36 zum Schließen der Kupplung verspannt. Das führt dazu, dass die Federwirkung der Dichteinrichtung 110 dazu beiträgt, die Kupplung zu öffnen. Durch den Spalt bei geöffneter Kupplung können die Spannung in der Dichteinrichtung 110 und die Anpresskraft und somit die Herstellkosten des Betätigungssystems reduziert werden. Der in Figur 11 in dem Kreis 116 dargestellte Spalt wirkt sich auch positiv auf das Schleppmoment bei geöffneter Kupplung aus, weil das Kühlmedium oder Kühlöl durch den Spalt entweichen kann. Die in den Figuren 11 und 12 dargestellte Dichteinrichtung 110 kann, wie bei den vorangegangenen Ausführungsbeispielen, mit Nasen, Fingern oder Haken ausgestattet sein.

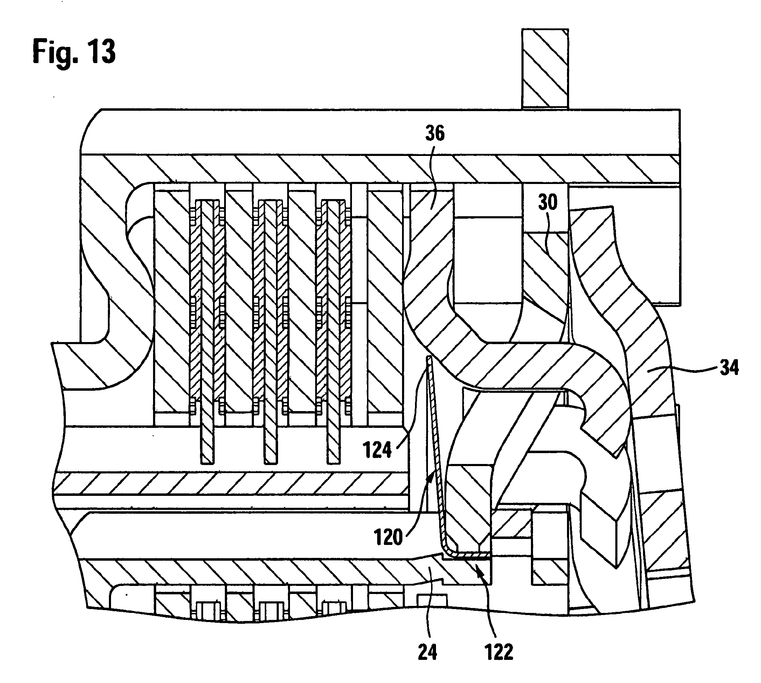

In Figur 13 ist eine Doppelkupplung mit einer Dichteinrichtung 120 dargestellt, die einen L-förmigen Querschnitt mit einem Anlageabschnitt 122 aufweist. Der Anlageabschnitt 122 ist in radialer Richtung zwischen dem Außenlamellenträger 24 und dem Tragring 30 angeordnet. Zwischen dem freien Ende 124 der Dichteinrichtung 120 und dem Druckring 36 ist ein kleiner Spalt vorhanden.

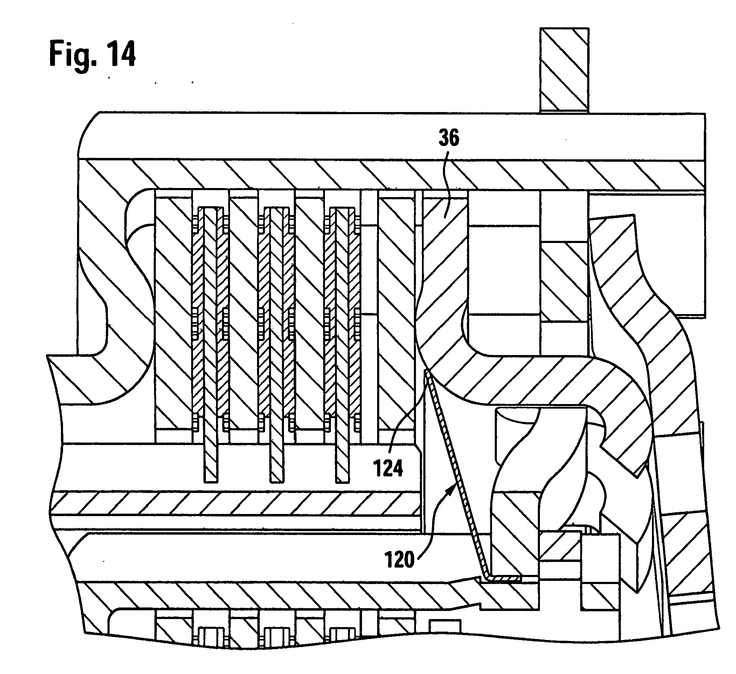

Bei dem in Figur 14 dargestellten Ausführungsbeispiel ist die Dichteinrichtung 120 als Feder ausgeführt. Durch eine geeignete Federvorspannung wird der Spalt zwischen dem freien Ende 124 und der Dichteinrichtung 120 und dem Druckring 36 geschlossen.

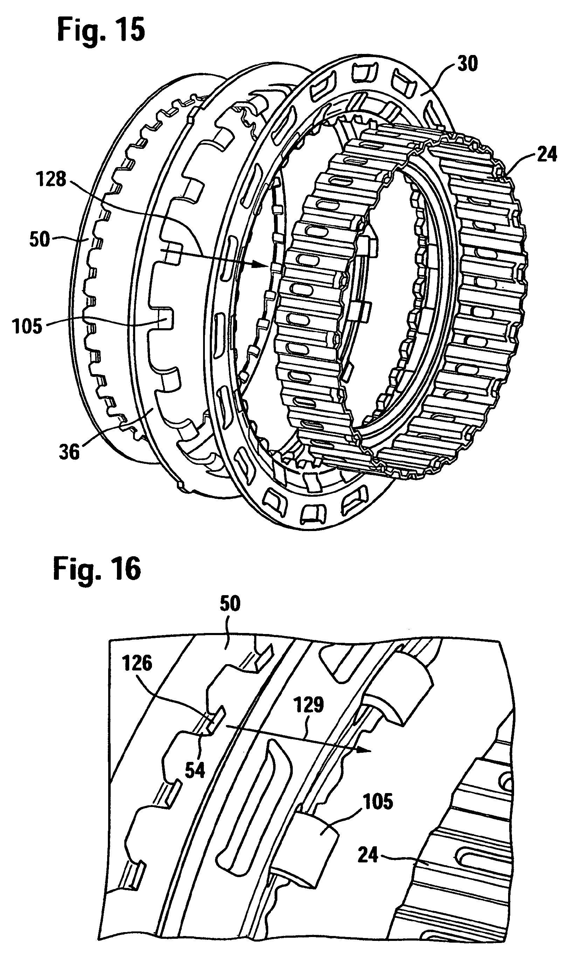

In den Figuren 15 bis 20 ist der Zusammenbau des Verbindungsteils 30 mit dem Außenlamellenträger 24 der radial inneren Lamellenkupplung 4 (siehe Figuren 2 und 3) und dem Druckring 36 sowie der Dichteinrichtung 50 in verschiedenen Ansichten und Zusammenbauschritten dargestellt. Durch einen Bajonettverschluss beziehungsweise eine Bajonettfassung werden das Verbindungsteil 30, der Druckring 36 und der Außenlamellenträger 24 mit Hilfe der Dichteinrichtung 50 im zusammengebauten Zustand in axialer Richtung fixiert.

In Figur 15 ist durch einen Pfeil 128 angedeutet, dass die Finger 105 des Druckrings 36 beim Zusammenbau durch die Fingerfenster in dem Verbindungsteil 30 hindurchgeführt werden. In Figur 16 sieht man, dass der Finger 105 durch das Fingerfenster in dem Verbindungsteil 30 hindurchgesteckt ist. Durch einen Pfeil 129 ist in Figur 16 angedeutet, dass das umgebogene Ende 126 der Dichteinrichtung 50 im Bereich eines Zahnfußes an der Innenverzahnung des Verbindungsteils 30 in axialer Richtung hindurchgeführt wird.

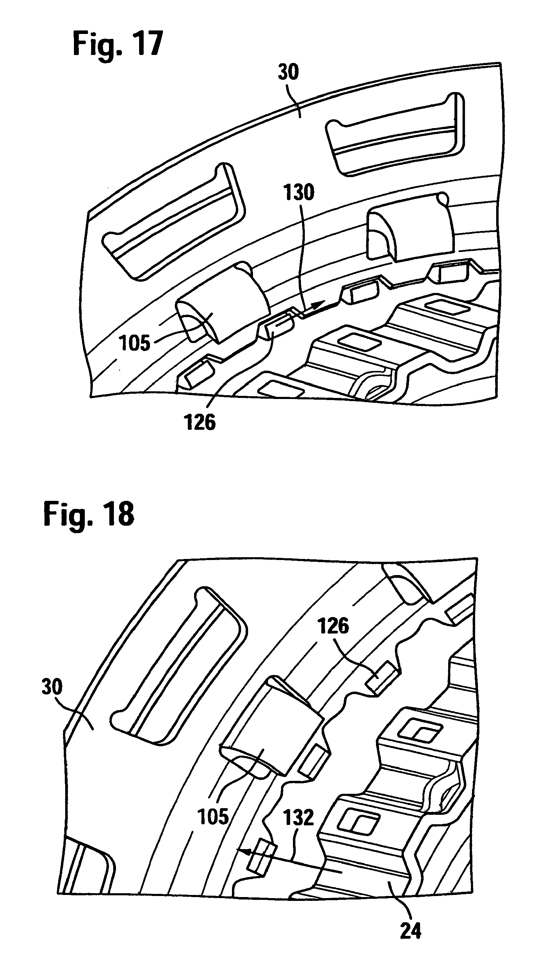

In Figur 17 sieht man, dass die Dichteinrichtung mit dem umgebogenen Ende 126, wie durch einen Pfeil 130 angedeutet ist, in Umfangsrichtung verdreht wird, um in Eingriff mit einem Zahn der Innenverzahnung des Verbindungsteils 30 zu gelangen. Durch das Zusammenwirken zwischen dem hakenförmig umgebogenen Ende 126 der Dichteinrichtung 50 mit dem Zahn an der Innenverzahnung des Verbindungsteils 30 wird eine bajonettverschlussartige Verbindung geschaffen. In Figur 18 ist durch einen Pfeil 132 angedeutet, dass nach dem Erzeugen des Bajonettverschlusses der Außenlamellenträger 24 mit einer Außenverzahnung in Eingriff mit der Innenverzahnung des Verbindungsteils 30 gebracht wird.

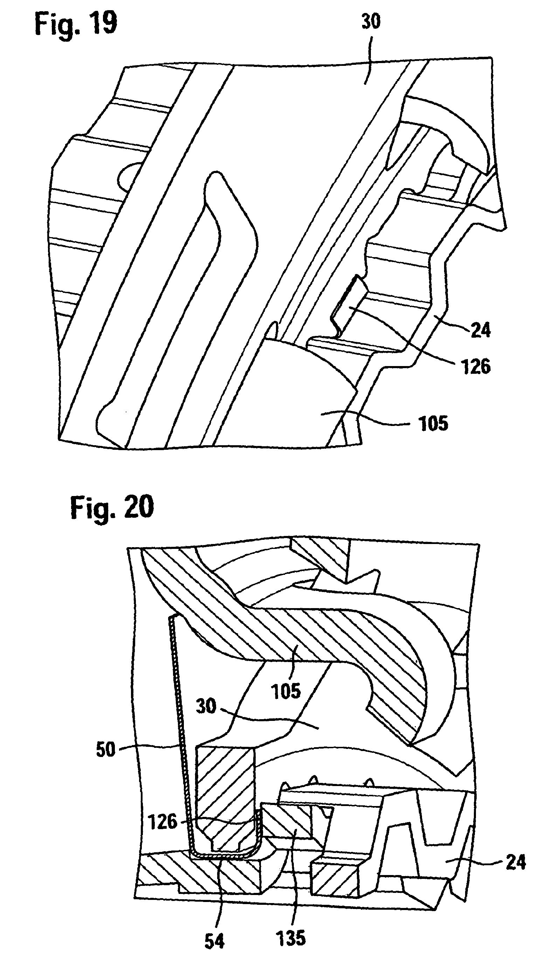

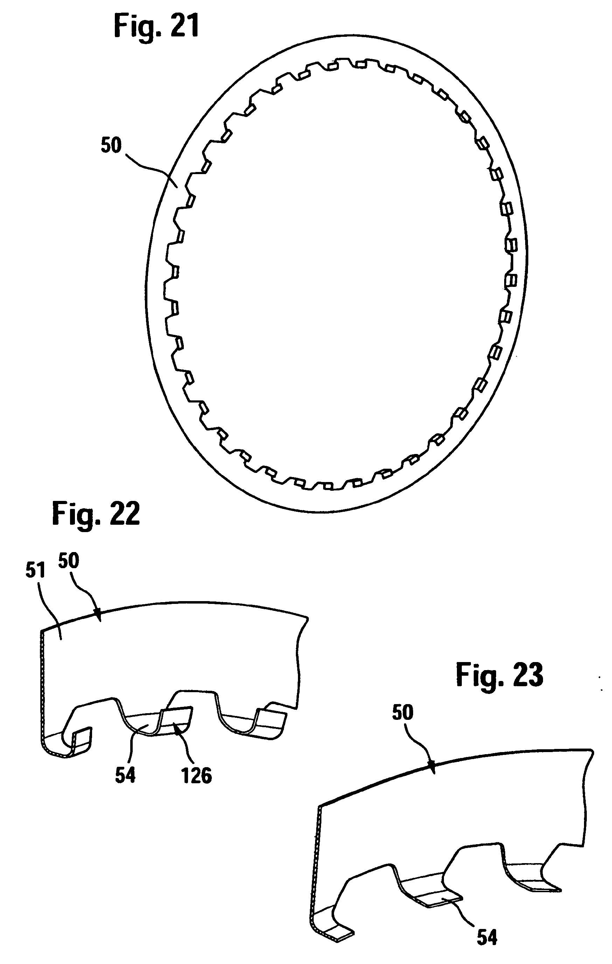

In Figur 19 sieht man, dass das umgebogene Ende 126 der Dichteinrichtung 50 zwischen zwei Zähnen der Außenverzahnung des Außenlamellenträgers 24 angeordnet ist. In Figur 20 sieht man, dass eine zwischen zwei Zähnen der Außenverzahnung beziehungsweise der Verzahnung des Außenlamellenträgers 24 ausgestellte Nut 135 so an dem umgebogenen Ende 126 der Dichteinrichtung 50 zur Anlage kommt, dass das umgebogene Ende 126 in axialer Richtung zwischen dem Verbindungsteil 30 und der ausgestellten Nut 135 eingeklemmt wird. In Figur 21 ist die Dichteinrichtung 50 perspektivisch dargestellt. In Figur 22 ist ein Ausschnitt aus Figur 21 vergrößert dargestellt. Von dem Dichtring 51 sind radial innen eine Vielzahl von Fingern oder Nasen 54 abgewinkelt. Die Enden der Nasen oder Finger 54 sind an ihrem Ende 126 umgebogen.

In Figur 23 ist der gleiche Ausschnitt wie in Figur 22 gemäß einem weiteren Ausführungsbeispiel dargestellt. In Figur 23 sieht man, dass die Nasen 54 der Dichteinrichtung 50 auch ohne umgebogenes Ende ausgeführt sein können.

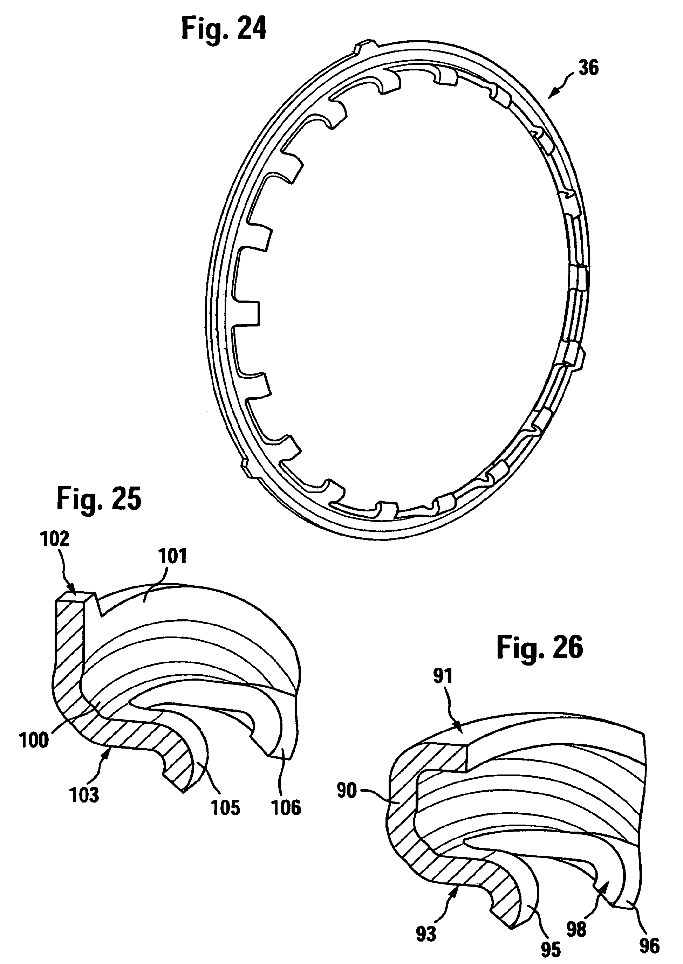

In Figur 24 ist der Druckring 36 perspektivisch dargestellt. In Figur 25 ist ein Ausschnitt aus Figur 24 vergrößert im Schnitt dargestellt. In Figur 25 sieht man, dass die Breite des Zahns 102 vom Zahnfuß radial nach außen linear abnimmt. Die Dichtungsfläche oder Dichtfläche 103 ist im eingebauten Zustand des Druckrings 36 dem benachbarten Lamellenpaket beziehungsweise dem zugehörigen Innenlamellenträger zugewandt. Die Enden der Finger 105, 106 sind radial nach innen gekrümmt. An den gekrümmten Enden der Finger 105, 106 kommt im eingebauten Zustand die Betätigungshebeleinrichtung zur Anlage.

In Figur 26 ist der gleiche Ausschnitt wie in Figur 25 gemäß einem weiteren Ausführungsbeispiel dargestellt. Das gleiche Ausführungsbeispiel ist auch in den Figuren 7 und 8 dargestellt. Der umgebogene Randbereich 91 dient gemäß einer ersten Option zum Zentrieren des Druckrings. Gemäß einer weiteren Option kann die Seitenfläche 98 des Fingers 96 zum Zentrieren verwendet werden. Daher wird die Seitenfläche auch als Zentrierfläche 98 bezeichnet. Die Dichtungsfläche ist mit 93 bezeichnet.

Gemäß einem wesentlichen Aspekt der in den Figuren 25 und 26 ausschnittsweise dargestellten Ausführungsbeispiele ist der Druckring 36 für das Federdesign der Dichteinrichtung mit einer speziellen geformten Dichtungsfläche 93; 103 ausgestattet. Die spezielle Verformung ermöglicht auf einfache Art und Weise, dass die federnd ausgeführte Dichteinrichtung nur bei geschlossener Kupplung verspannt wird. Im geöffneten Zustand der Kupplung wird zwischen der federnd ausgeführten Dichteinrichtung und dem Druckring ein Spalt freigegeben, wie in den Figuren 11 und 13 gezeigt ist. Dadurch treten im Betrieb in der federnd ausgeführten Dichteinrichtung sowie an den Kupplungsteilen und Betätigungsteilen kleinere Spannungen und Kräfte auf. Das führt dazu, dass die zugehörigen Kupplungen kostengünstiger hergestellt werden können.

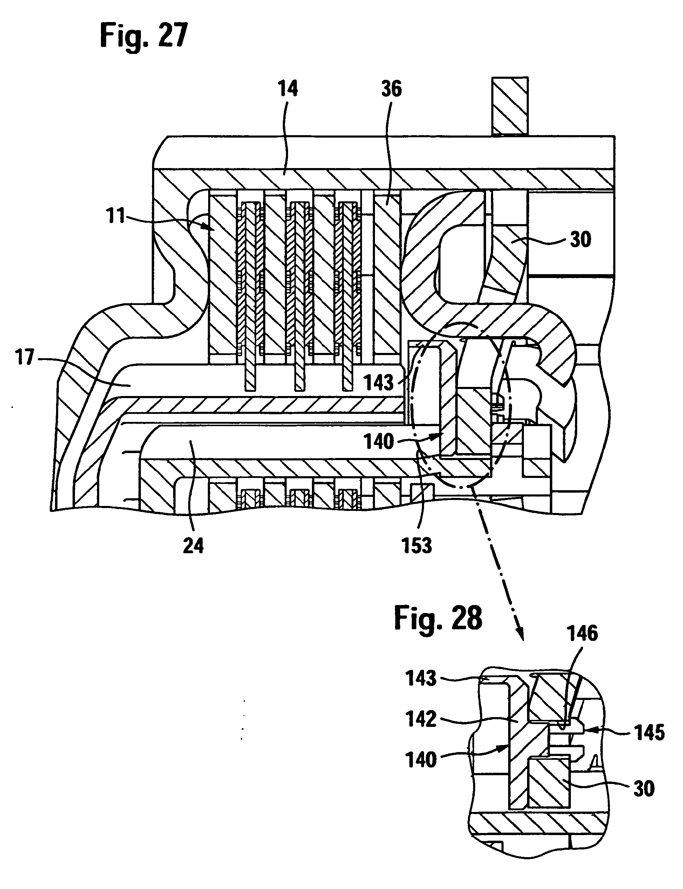

In den Figuren 27 bis 30 ist eine Dichteinrichtung 140 gemäß einem weiteren Ausführungsbeispiel sowohl im eingebauten Zustand als auch separat in verschiedenen Ansichten dargestellt. Die Dichteinrichtung 140 ist gemäß einem weiteren Aspekt der Erfindung als Kunststoffteil ausgeführt. Dabei ist die Dichteinrichtung 140 vorzugsweise so ausgeführt, dass sie im Spritzgussverfahren hergestellt werden kann. Die Dichteinrichtung 140 umfasst einen Dichtungsring oder Dichtring 142, der im Wesentlichen die Gestalt einer Kreisringscheibe aufweist. Radial außen ist der Dichtring 142 einstückig mit einem Kragen 143 verbunden, der vorzugsweise im rechten Winkel, von dem Dichtring 142 abgewinkelt ist. Der Kragen 43 ist dem Lamellenpaket 11 der radial äußeren Lamellenkupplung zugewandt und radial innerhalb des Druckrings 36 angeordnet. Gleichzeitig ist der Kragen 143 radial außerhalb des Innenlamellenträgers 17 der radial äußeren Lamellenkupplung angeordnet.

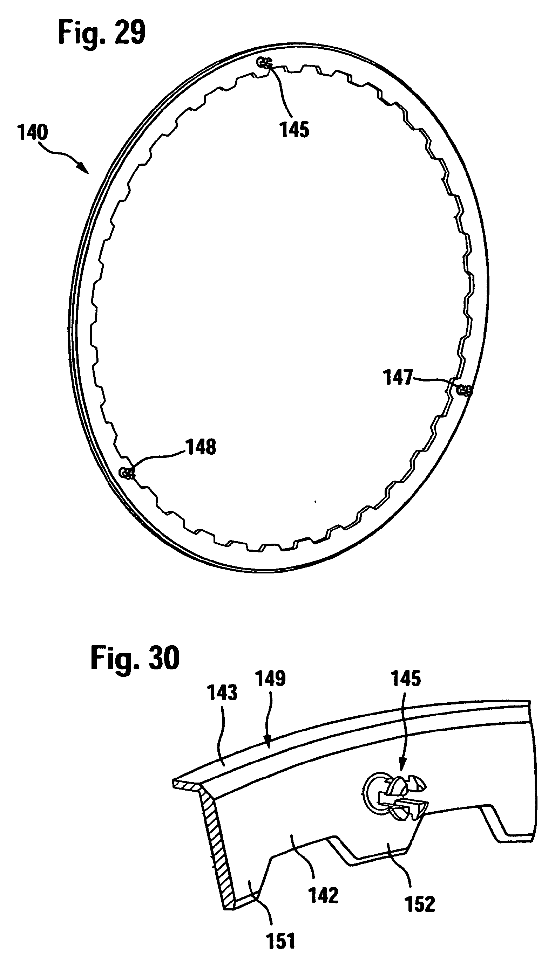

Auf seiner dem Lamellenpaket 11 abgewandten Seite gehen von dem Dichtring 142 Schnapphaken 145 aus. Die Schnapphaken 145 können, wie man in Figur 30 sieht, aus mehreren, insbesondere vier, Schnapphakensegmenten gebildet sein. Der Schnapphaken 145 erstreckt sich, wie man in Figur 28 sieht, durch ein Durchgangsloch 146 hindurch, das in dem Verbindungsteil 30 ausgespart ist. Das Durchgangsloch 146 und der Schnapphaken 145 sind so dimensioniert und ausgelegt, dass der Schnapphaken 145 beim Zusammenbau ohne Beschädigung durch das Durchgangsloch 146 hindurchgeführt werden kann.

Wenn der Dichtring 142 an dem Verbindungsteil 30 zur Anlage kommt, dann spreizen sich die vorgespannten Enden des Schnapphakens 145 radial so nach außen, dass sie den Randbereich des Durchgangslochs 146 auf der dem Dichtring 142 abgewandten Seite so hintergreifen, dass der Dichtring 142 in Anlage an dem Verbindungsteil 30 gehalten wird. In Figur 29 sieht man, dass drei Schnapphaken 145, 147, 148 gleichmäßig über den Umfang der Dichteinrichtung 140 verteilt sind. Mit 149 ist die Dichtfläche der Dichteinrichtung 140 bezeichnet. Radial innen weist der Dichtring 142 Nasen oder Zähne 151, 152 auf, die an Erhöhungen 153 des Außenlamellenträgers 24 zur Anlage kommen. Die Erhöhungen 153 bilden einen axialen Anschlag für den Dichtring 142.

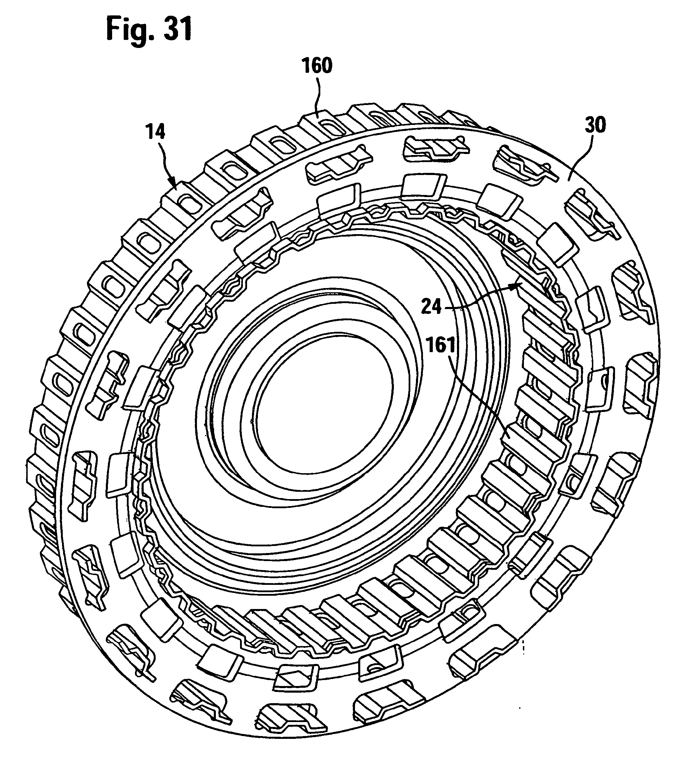

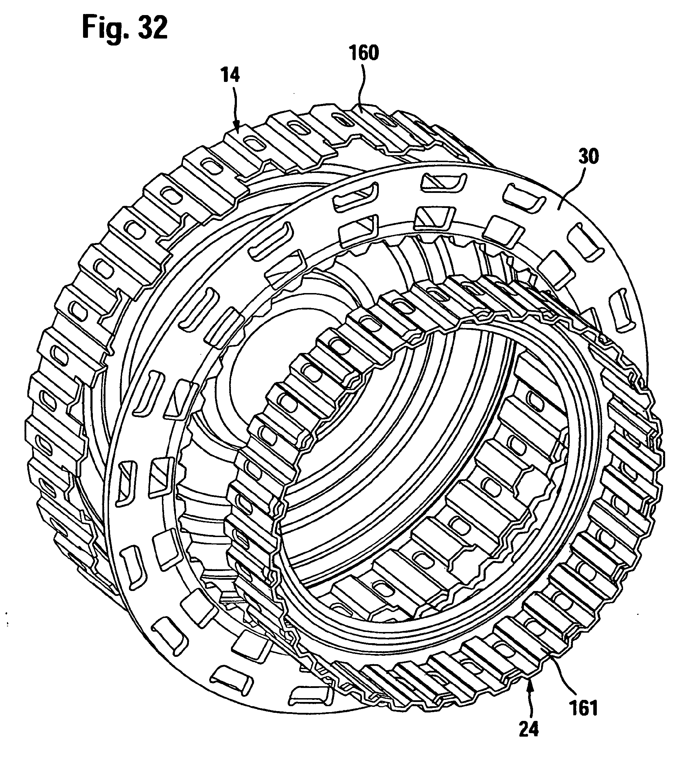

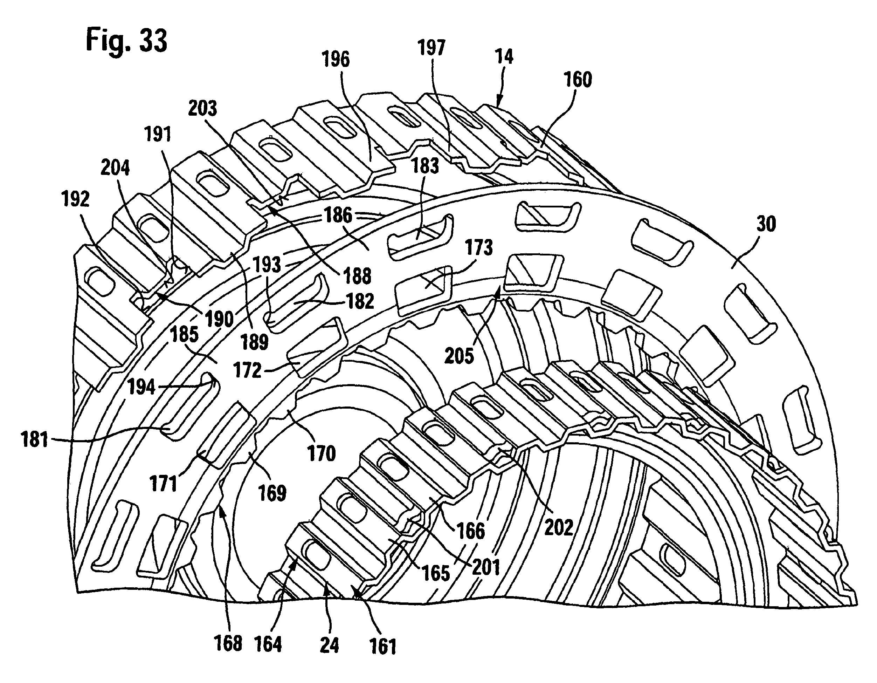

In den Figuren 31 bis 33 ist der Außenlamellenträger 14 der radial äußeren Lamellenkupplung zusammen mit dem Verbindungsteil 30 und dem Außenlamellenträger 24 der radial inneren Kupplung in verschiedenen Ansichten und Darstellungen gezeigt. Der Außenlamellenträger 14 umfasst einen durch Rollformen erzeugten Verzahnungskörper 160. Der Verzahnungskörper 160 ist so verformt, dass er radial innen eine Innenverzahnung und radial außen eine Außenverzahnung aufweist. Der Außenlamellenträger 24 der radial inneren Lamellenkupplung umfasst einen ähnlichen Verzahnungskörper 161, der allerdings einen kleineren Durchmesser wie der Verzahnungskörper 160 aufweist. In Figur 33 ist die Verzahnung des Außenlamellenträgers 24 mit 164 bezeichnet. Die Verzahnung 164 umfasst eine Außenverzahnung mit Zähnen 165, 166, die gleichmäßig über den Umfang des Außenlamellenträgers 24 verteilt sind. Die Außenverzahnung des Außenlamellenträgers 24 kommt mit einer Innenverzahnung 168 in Eingriff, die radial innen an dem Verbindungsteil 30 ausgebildet ist. Die Innenverzahnung 168 umfasst Zähne 169, 170, die in die Zahnzwischenräume der Außenverzahnung des Außenlamellenträgers 24 eingreifen.

Das Verbindungsteil 30 umfasst eine Vielzahl von Fingerfenstem 171 bis 173, die gleichmäßig über einen Umfang oder Teilkreis des Verbindungsteils 30 angeordnet sind. Die Fingerfenster 171 bis 173 ermöglichen den Durchgriff der an dem Druckring ausgebildeten Finger. Radial außerhalb der Fingerfenster 171 bis 173 sind in dem Verbindungsteil 30 Stegfenster 181 bis 183 ausgespart. Jedem Stegfenster 181 bis 183 ist ein Fingerfenster 171 bis 173 zugeordnet. Jedes Stegfenster 181 bis 183 wird in Umfangsrichtung von jeweils zwei Stegen 185, 186 begrenzt, die sich in radialer Richtung des Verbindungsteils 30 erstrecken. Die Stegfenster 181 bis 183 dienen dazu, eine drehfeste, formschlüssige Verbindung zwischen dem Verbindungsteil 30 und dem Außenlamellenträger 14 zu schaffen.

Zu diesem Zweck weist der Außenlamellenträger 14 eine Vielzahl von Aussparungen 188, 190 auf, zwischen denen jeweils ein Eingriffelement 189 ausgebildet ist. Jedem Stegfenster 181 bis 183 ist jeweils ein Eingriffelement 189 zugeordnet. Die Aussparung 190 wird in Umfangsrichtung von zwei gegenüberliegenden Seitenflächen 191, 192 von benachbarten Eingriffelementen 189 begrenzt. An den Seitenflächen 191, 192 der Aussparung 190 kommen im zusammengesteckten Zustand mit dem Verbindungsteil 30 Seitenflächen 193, 194 in Anlage, welche die zugehörigen Stegfenster 181, 182 in dem Verbindungsteil 30 begrenzen. Im zusammengesteckten Zustand greift jeweils ein Eingriffelement 189 in das zugehörige Stegfenster 182 ein. Die Aussparungen 188, 190 sind so dimensioniert, dass ein Teil der zugehörigen Zahnköpfe 196, 197 der Verzahnung 164 stehen bleibt.

In den Figuren 31 bis 33 ist gezeigt, wie der Außenlamellenträger 24 der inneren Kupplung in den Außenlamellenträger 14 der äußeren Kupplung eingehängt ist. Das separate Verbindungsteil 30 liefert den Vorteil, dass die Verzahnungskörper 160, 161 der beiden Außenlamellenträger jeweils durch Rollformen gefertigt werden können.

Das Verbindungsteil 30 hat unter anderem die Funktion, das Drehmoment von dem Außenlamellenträger 14, der vorzugsweise mit einer Kurbelwelle einer Brennkraftmaschine drehfest verbunden ist, zu dem Verzahnungskörper 161 des Außenlamellenträgers 24 der inneren Kupplung zu leiten. Die Übertragung des Drehmoments von dem Verzahnungskörper 160 des Außenlamellenträgers 14 erfolgt über die Seitenflächen 191, 192 der Aussparungen 190 auf die Seitenflächen 193, 194 der Stege 185 des Verbindungsteils 30. Das Verbindungsteil 30 ist durch eine Steckverbindung mit dem Außenlamellenträger 14 verbunden. Die Übertragung des Drehmoments von dem Verbindungsteil 30 auf den Verzahnungskörper 161 erfolgt an den Flanken der Zähne 169, 170 der Innenverzahnung des Verbindungsteils 30 auf die flanken der Zähne 165, 166 der Außenverzahnung des Verzahnungskörpers 161.

Darüber hinaus hat das Verbindungsteil 30 die Aufgabe beziehungsweise Funktion, die Betätigungskraft der radial inneren Lamellenkupplung an dem Außenlamellenträger 14 der äußeren Wellenkupplung abzustützen. Dabei dienen aus dem Verzahnungskörper 161 ausgestellte Nuten 201, 202 als axialer Anschlag des Verbindungsteils 30 an dem Verzahnungskörper 161. Über die ausgestellten Nuten 201, 202 wird die Betätigungskraft der inneren Lamellenkupplung in das Verbindungsteil 30 eingeleitet. Die Stege 185, 186 des Verbindungsteils 30 stehen in axialer Richtung an Anschlagflächen 203, 204 der Aussparungen 188, 190 an, um die Betätigungskraft weiterzuleiten. Aus Festigkeitsgründen ist es vorteilhaft, dass die ausgestellten Nuten 201, 202 symmetrisch zur Mitte der Stege 185, 186 angeordnet sind. Dadurch wird sichergestellt, dass die Betätigungskraft nicht über einen schmalen Restquerschnitt 205 zwischen der Innenverzahnung 168 und den Fingerfenstem 171, 172, 173 für die Finger des Druckrings geleitet wird.

Die Verzahnungen des Außenlamellenträgers 14 der äußeren Lamellenkupplung und die Verzahnungen an dem Verzahnungskörper 161 des Außenlamellenträgers 24 der inneren Lamellenkupplung weisen die gleiche Zähnezahl auf. An dem Verzahnungskörper 161 des Außenlamellenträgers 24 der inneren Lamellenkupplung ist jeder zweite Zahn ausgestellt, das heißt mit einer ausgestellten Nut 201, 202 versehen. Die Anzahl der Stegfenster und die Anzahl der Fingerfenster entsprechen jeweils genau der Hälfte der Anzahl der Zähne.

Zur Erhöhung der Steifigkeit und um die zulässige Grenzdrehzahl zu erhöhen, umgreift das Verbindungsteil 30 den Außenlamellenträger 14 und stützt die außen liegenden Zahnköpfe 196, 197 radial ab. Um alle Zahnköpfe abzustützen, ist es vorteilhaft, das Verbindungsteil 30 mit halb so viel Fenstern wie Zähnen an dem Außenlamellenträger 14 zu versehen. Der Breite der Stegfenster 181, 182, 183 ist so abgestimmt, dass circa zwei Drittel der Kopfbreite der Zähne des Außenlamellenträgers 14 stehen bleiben.

Die radiale Fixierung zwischen dem Verzahnungskörper 161 des Außenlamellenträgers 24 gegenüber dem Verbindungsteil 30 erfolgt zwischen dem Kopfkreisdurchmesser der Zähne 165, 166 des Verzahnungskörpers 161 und dem Fußkreisdurchmesser der Zähne 169, 170 des Verbindungsteils 30. Wird der Verzahnungskörper 161 am Kopfkreis zu dem offenen einde hin konisch ausgebildet, dann kann beim Aufschieben des Verbindungsteils 30 eine Verspannung zwischen diesen beiden Teilen erfolgen. Dadurch wird das Radialspiel reduziert beziehungsweise aufgehoben.

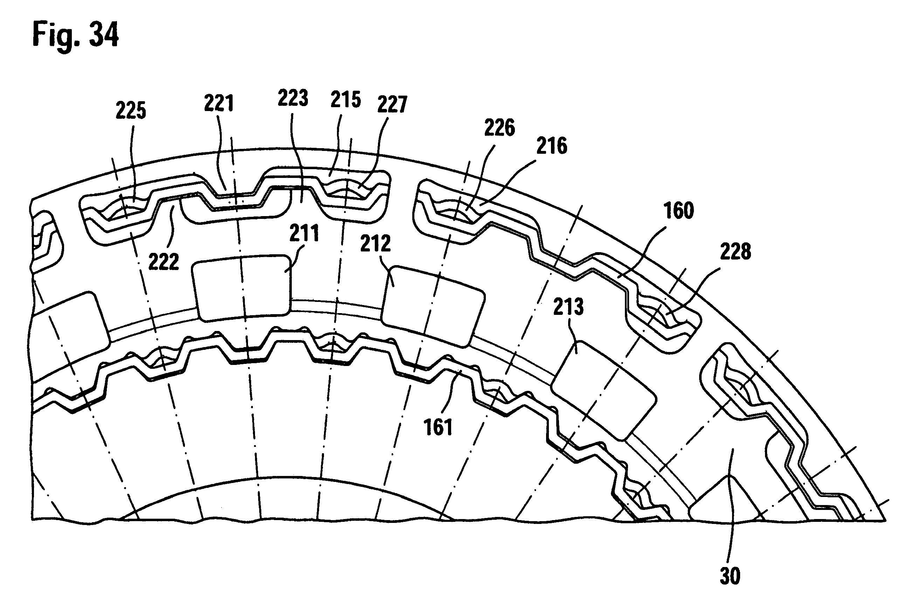

In Figur 34 ist eine weitere Ausführungsform des Verbindungsteils 30 mitFingerfenstem 211 bis 213 und Zahnfenster 215, 216 dargestellt. Die Zahnfenster 215, 216 weisen jeweils einen Außenzahn 221, der sich an dem Verbindungsteil 30 radial nach innen erstreckt, und zwei Innenzähne 222, 223 auf, die sich an dem Verbindungsteil 30 radial nach außen erstrecken. Die Innenzähne 222, 223 greifen in die Innenverzahnung des Verzahnungskörpers 160 ein. Der Außenzahn 221 greift in die Außenverzahnung des Verzahnungskörpers 160 ein. Die Drehmomentübertragung erfolgt sowohl über die Außenzähne 221 als auch über die Innenzähne 222, 223. Die Innenzähne 222, 223 übernehmen an ihren Flanken gleichzeitig die Fliehkraftabstützung. Die in Figur 34 dargestellte Ausführungsform zeichnet sich durch eine verringerte Flächenpressung bei der Drehmomentübertragung zwischen dem Außenlamellenträger 14 und dem Verbindungsteil 30 aus. In den Zahnfenstern 215, 216 sind jeweils zwei ausgestellte Nuten 225, 227 und 226, 228 sichtbar, die aus dem Verzahnungskörper 160 herausgestellt sind.

### Bezugszeichenliste

- 1.: Doppelkupplung
- 3.: radial äußere Lamellenkupplung
- 4.: radial innere Lamellenkupplung
- 11.: Lamellenpaket
- 12.: Außenlamellen
- 13.: Außenlamellen
- 14.: Außenlamellenträger
- 15.: Innenlamellen
- 16.: Innenlamellen
- 17.: Innenlamellenträger
- 21.: Lamellenpaket
- 22.: Außenlamellen
- 23.: Außenlamellen
- 24.: Außenlamellenträger
- 25.: Innenlamellen
- 26.: Innenlamellen
- 27.: Innenlamellenträger
- 30.: Trageinrichtung
- 34.: Betätigungshebeleinrichtung
- 36.: Druckübertragungseinrichtung
- 38.: Durchgangslöcher
- 40.: Finger
- 41.: Pfeil
- 43.: Pfeil
- 44.: Pfeil
- 45.: Pfeil
- 48.: Pfeil
- 50.: Dichteinrichtung
- 51.: Dichtring
- 52.: abgewinkelter Schenke
- 54.: Nase
- 55.: Nut
- 56.: Pfeil
- 57.: Pfeil
- 58.: Doppelpfeil
- 64,: Betätigungshebeleinrichtung
- 66.: Druckübertragung
- 67.: Pfeil
- 70.: Außenverzahnung
- 72.: Pfeil
- 80.: Dichteinrichtung
- 81.: Endlamelle
- 82.: Dichtstelle
- 84.: Nase
- 85.: Nase
- 86.: Nase
- 90.: Ringkörper
- 91.: umgebogener Randbereich
- 93.: Dichtfläche
- 95.: Finger
- 96.: Finger
- 98.: Zentrierfläche
- 100.: Ringkörper
- 101.: Randbereich
- 102.: Zahn
- 103.: Dichtfläche
- 105.: Finger
- 106.: Finger
- 110.: Dichteinrichtung
- 112.: U-förmiger Positionierabschnitt

- 114.: freies Ende
- 116.: Kreis
- 118.: Stelle
- 120.: Dichteinrichtung
- 122.: Anlageabschnitt
- 124.: freies Ende
- 126.: umgebogenes Ende
- 128.: Pfeil
- 129.: Pfeil
- 130.: Pfeil
- 132.: Pfeil
- 135.: ausgestellte Nut
- 140.: Dichteinrichtung
- 142.: Dichtring
- 143.: Kragen
- 145.: Schnapphaken
- 146.: Durchgangsloch
- 147.: Schnapphaken
- 148.: Schnapphaken
- 149.: Dichtfläche
- 151.: Nase
- 152.: Nase
- 153.: Erhöhung
- 160.: Verzahnungskörper
- 161.: Verzahnungskörper
- 164.: Verzahnung
- 165.: Zahn
- 166.: Zahn
- 171.: Fingerfenster
- 172.: Fingerfenster
- 173.: Fingerfenster
- 181.: Stegfenster
- 182.: Stegfenster
- 183.: Stegfenster
- 185.: Steg
- 186.: Steg
- 188.: Aussparung
- 189.: Eingriffelement
- 190.: Aussparung
- 191.: Seitenfläche
- 192.: Seitenfläche
- 193.: Seitenfläche
- 194.: Seitenfläche
- 196.: Zahnkopf
- 197.: Zahnkopf
- 201.: Nut
- 202.: Nut
- 203.: Seitenfläche
- 204.: Seitenfläche
- 205.: Restquerschnitt
- 211.: Fingerfenster
- 212.: Fingerfenster
- 213.: Fingerfenster
- 215.: Zahnfenster
- 216.: Zahnfenster
- 221.: Außenzahn
- 222.: Innenzahn
- 223.: Innenzahn
- 225.: ausgestellte Nut
- 226.: ausgestellte Nut
- 227.: ausgestellte Nut
- 228.: ausgestellte Nut

## Patentansprüche

1. Drehmomentübertragungseinrichtung, insbesondere im Antriebsstrang eines Kraftfahrzeugs zur Drehmomentübertragung zwischen einer Antriebseinheit, insbesondere einer Brennkraftmaschine, und einem Getriebe, mit mindestens einer Lamellenkupplung (3,4), insbesondere einer Doppellamellenkupplung, die mindestens ein Lamellenpaket (11,21) umfasst, das Außenlamellen, die drehfest mit einem Außenlamellenträger (14,24) verbunden sind, und Innenlamellen umfasst, die drehfest mit einem Innenlamellenträger (17,27) verbunden sind, und mit mindestens einer Betätigungshebeleinrichtung (34, 64) zur Betätigung der Lamellenkupplung, wobei sich eine Druckübertragungseinrichtung (36) zwischen dem Lamellenpaket (11) und der Betätigungshebeleinrichtung (34) durch mindestens ein Durchgangsloch (38) hindurch erstreckt, das in einer Trageinrichtung (30) ausgespart ist, **dadurch gekennzeichnet, dass** zwischen dem Innenlamellenträger (17) und dem Durchgangsloch (38) eine Dichteinrichtung (50;140) angeordnet ist.

2. Drehmomentübertragungseinrichtung nach Anspruch 1, **dadurch gekennzeichnet, dass** die Dichteinrichtung (50;140) einen Dichtring (51;142) umfasst, der eine Schnittstelle zwischen dem Innenlamellenträger (17) und dem Lamellenpaket (11) in radialer Richtung überlappt.

3. Drehmomentübertragungseinrichtung nach Anspruch 2, **dadurch gekennzeichnet, dass** der Dichtring (51), zumindest teilweise, einen im Wesentlichen L-förmigen, U-förmigen oder C-förmigen Querschnitt aufweist.

4. Drehmomentübertragungseinrichtung nach Anspruch 2 oder 3, **dadurch gekennzeichnet, dass** der Dichtring (51), im Querschnitt betrachtet, einen Schenkel (52) aufweist, der in radialer Richtung zwischen dem Druckring (36) und einem beziehungsweise dem Außenlamellenträger (24) einer beziehungsweise der zweiten Lamellenkupplung (4) angeordnet ist, die radial innerhalb der ersten Lamellenkupplung (3) angeordnet ist.

5. Drehmomentübertragungseinrichtung nach Anspruch 2 oder 3, **dadurch gekennzeichnet, dass** der Dichtring (51), im Querschnitt betrachtet, einen Schenkel (52) aufweist, der in axialer Richtung versetzt zu und radial außerhalb von dem Innenlamellenträger (17) angeordnet ist.

6. Drehmomentübertragungseinrichtung nach Anspruch 4 oder 5, **dadurch gekennzeichnet, dass** das Ende des Schenkels (52) zwischen dem Innenlamellenträger (17) und einer zugehörigen Lamelle (81) angeordnet ist.

7. Drehmomentübertragungseinrichtung nach einem der Ansprüche 2 bis 6, **dadurch gekennzeichnet, dass** der Dichtring (51), im Querschnitt betrachtet, einen weiteren Schenkel aufweist, der in axialer Richtung versetzt zu und radial innerhalb von dem Innenlamellenträger (17) angeordnet ist.

8. Drehmomentübertragungseinrichtung nach einem der vorhergehenden Ansprüche, **dadurch gekennzeichnet, dass** die Dichteinrichtung (50) als Transportsicherung ausgeführt ist.

9. Drehmomentübertragungseinrichtung nach einem der vorhergehenden Ansprüche, **dadurch gekennzeichnet, dass** die Dichteinrichtung (50) eine Einbausicherung umfasst.

10. Drehmomentübertragungseinrichtung nach Anspruch 9, **dadurch gekennzeichnet, dass** die Einbausicherung eine Rasteinrichtung umfasst, die ein Einrasten der Dichteinrichtung (50) bei deren Einbau bewirkt.

11. Drehmomentübertragungseinrichtung nach Anspruch 9, **dadurch gekennzeichnet, dass** die Einbausicherung als Bajonettverschluss ausgeführt ist.

12. Drehmomentübertragungseinrichtung nach einem der vorhergehenden Ansprüche, **dadurch gekennzeichnet, dass** die Dichteinrichtung (50), insbesondere der Dichtring, mindestens eine Nase (54), einen Haken und/oder einen Schenkel aufweist, die beziehungsweise der sich, zumindest teilweise, radial nach innen erstreckt und in eine Vertiefung, ein Durchgangsloch oder eine Nut (55) eingreift, die beziehungsweise das in einem beziehungsweise dem Außenlamellenträger (24) einer beziehungsweise der zweiten Lamellenkupplung (4) vorgesehen ist, die radial innerhalb der ersten Lamellenkupplung (3) angeordnet ist.

13. Drehmomentübertragungseinrichtung nach Anspruch 12, **dadurch gekennzeichnet, dass** die Nase (54), der Haken oder Schenkel federnd vorgespannt ist.

14. Drehmomentübertragungseinrichtung nach einem der Ansprüche 2 bis 13, **dadurch gekennzeichnet, dass** der Dichtring (51) federnd vorgespannt ist.

15. Drehmomentübertragungseinrichtung nach einem der vorhergehenden Ansprüche, **dadurch gekennzeichnet, dass** die Dichteinrichtung (50) so ausgeführt ist, dass durch die Dichteinrichtung die Öffnungsbewegung der Lamellenkupplung (3) unterstützt wird.

16. Drehmomentübertragungseinrichtung nach einem der vorhergehenden Ansprüche, **dadurch gekennzeichnet, dass** die Dichteinrichtung (50) so ausgeführt ist, dass die Dichteinrichtung (50) ihre Dichtfunktion nur dann ausübt, wenn die Lamellenkupplung (3) geschlossen ist.

17. Drehmomentübertragungseinrichtung nach einem der vorhergehenden Ansprüche, **dadurch gekennzeichnet, dass** die Dichteinrichtung (50) aus Blech gestanzt und/oder geformt ist.

18. Drehmomentübertragungseinrichtung nach einem der Ansprüche 1 bis 16, **dadurch gekennzeichnet, dass** die Dichteinrichtung (140) aus Kunststoff gebildet ist.

19. Drehmomentübertragungseinrichtung nach Anspruch 18, **dadurch gekennzeichnet, dass** die Dichteinrichtung (140) mindestens einen Schnapphaken (145,147,148) aufweist, der in eine Öffnung (146) der Trageinrichtung (30) eingreift.

20. Drehmomentübertragungseinrichtung nach einem der vorhergehenden Ansprüche, **dadurch gekennzeichnet, dass** der Druckring (36) Zentriermittel umfasst.

21. Drehmomentübertragungseinrichtung nach dem vorhergehenden Anspruch, **dadurch gekennzeichnet, dass** der Druckring (36), insbesondere radial innen, Nasen mit Seitenflächen aufweist, die dazu dienen, den Druckring zu zentrieren.

22. Drehmomentübertragungseinrichtung nach Anspruch 20, **dadurch gekennzeichnet, dass** der Druckring (36), insbesondere radial außen, Zähne (102) mit Flanken aufweist, die dazu dienen, den Druckring (36) zu zentrieren.

23. Drehmomentübertragungseinrichtung nach einem der Ansprüche 20 bis 22, **dadurch gekennzeichnet, dass** der Druckring (36), vorzugsweise radial außen, einen umgebogenen Randbereich (91) aufweist.

24. Antriebsstrang eines Kraftfahrzeugs mit einer Drehmomentübertragungseinrichtung nach einem der vorhergehenden Ansprüche.

## Claims

1. Torque transfer device, particularly in the drive train of a motor vehicle for torque transfer between a drive unit, in particular an internal combustion engine, and a transmission, with at least one multiple-disc clutch (3, 4), in particular a double-disc clutch, which comprises at least one disc stack (11, 21) which comprises outer discs, which are connected fixedly in terms of rotation to an outer-disc carrier (14, 24), and inner discs, which are connected fixedly in terms of rotation to an inner-disc carrier (17, 27), and with at least one actuating lever device (34, 64) for actuating the multiple-disc clutch, a pressure transfer device (36) between the disc stack (11) and actuating lever device (34) extending through at least one passage hole (38) which is cutout in a carrying device (30), **characterized in that** a sealing device (50; 140) is arranged between the inner-disc carrier (17) and the passage hole (38).

2. Torque transfer device according to Claim 1, **characterized in that** the sealing device (50; 140) comprises a sealing ring (51; 142) which overlaps an interface between the inner-disc carrier (17) and the disc stack (11) in the radial direction.

3. Torque transfer device according to Claim 2, **characterized in that** the sealing ring (51) has at least partially an essentially L-shaped, U-shaped or C-shaped cross section.

4. Torque transfer device according to Claim 2 or 3, **characterized in that** the sealing ring (51) has, as seen in cross section, a leg (52) which is arranged in the radial direction between the pressure ring (36) and a or the outer-disc carrier (24) of a or the second multiple-disc clutch (4) which is arranged radially within the first multiple-disc clutch (3).

5. Torque transfer device according to Claim 2 or 3, **characterized in that** the sealing ring (51) has, as seen in cross section, a leg (52) which is arranged so as to be offset in the axial direction to and radially outside of the inner-disc carrier (17).

6. Torque transfer device according to Claim 4 or 5, **characterized in that** the end of the leg (52) is arranged between the inner-disc carrier (17) and an associated disc (81).

7. Torque transfer device according to one of Claims 2 to 6, **characterized in that** the sealing ring (51) has, as seen in cross section, a further leg which is arranged so as to be offset in the axial direction to and radially inside of the inner-disc carrier (17).

8. Torque transfer device according to one of the preceding claims, **characterized in that** the sealing device (50) is designed as a transport safeguard.

9. Torque transfer device according to one of the preceding claims, **characterized in that** the sealing device (50) comprises installation protection.

10. Torque transfer device according to Claim 9, **characterized in that** the installation protection comprises a latching device which causes the sealing device (50) to be latched in when it is installed.

11. Torque transfer device according to Claim 9, **characterized in that** the installation protection is designed as a bayonet fastening.

12. Torque transfer device according to one of the preceding claims, **characterized in that** the sealing device (50), in particular the sealing ring, has at least one nose (54), hook and/or leg which extends at least partially radially inwards and engages into a depression, passage hole or groove (55) which is provided in a or the outer-disc carrier (24) of a or the second multiple-disc clutch (4) which is arranged radially within the first multiple-disc clutch (3).

13. Torque transfer device according to Claim 12, **characterized in that** the nose (54), hook or leg is prestressed resiliently.

14. Torque transfer device according to one of Claims 2 to 13, **characterized in that** the sealing ring (51) is prestressed resiliently.

15. Torque transfer device according to one of the preceding claims, **characterized in that** the sealing device (50) is designed such that the opening movement of the multiple-disc clutch (3) is assisted by the sealing device.

16. Torque transfer device according to one of the preceding claims, **characterized in that** the sealing device (50) is designed such that the sealing device (50) performs its sealing function only when the multiple-disc clutch (3) is closed.

17. Torque transfer device according to one of the preceding claims, **characterized in that** the sealing device (50) is stamped and/or formed from sheet metal.

18. Torque transfer device according to one of Claims 1 to 16, **characterized in that** the sealing device (140) is formed from plastic.

19. Torque transfer device according to Claim 18, **characterized in that** the sealing device (140) has at least one snap hook (145, 147, 148) which engages into an orifice (146) of the carrying device (30).

20. Torque transfer device according to one of the preceding claims, **characterized in that** the pressure ring (36) comprises centring means.

21. Torque transfer device according to the preceding claim, **characterized in that** the pressure ring (36) has, in particular radially on the inside, noses with side faces which serve for centring the pressure ring.

22. Torque transfer device according to Claim 20, **characterized in that** the pressure ring (36) has, in particular radially on the outside, teeth (102) with flanks which serve for centring the pressure ring (36).

23. Torque transfer device according to one of Claims 20 to 22, **characterized in that** the pressure ring (36) has, preferably radially on the outside, a bent-round marginal region (91).

24. Drive train of a motor vehicle with a torque transfer device according to one of the preceding claims.

## Revendications

1. Dispositif de transfert de couple, en particulier dans la chaîne cinématique d'un véhicule automobile pour le transfert de couple entre une unité d'entraînement, notamment un moteur à combustion interne, et une transmission, comprenant au moins un embrayage à disques (3, 4), en particulier un double embrayage à disques, qui comprend au moins un paquet de disques (11, 21), qui comprend des disques extérieurs qui sont connectés de manière solidaire en rotation à un support de disques extérieurs (14, 24) et des disques intérieurs, qui sont connectés de manière solidaire en rotation à un support de disques intérieurs (17, 27), et comprenant au moins un dispositif de levier d'actionnement (34, 64) pour l'actionnement de l'embrayage à disques, un dispositif de transfert de pression (36) entre le paquet de disques (11) et le dispositif de levier d'actionnement (34) s'étendant à travers au moins un trou traversant (38) qui est évidé dans un dispositif de support (30), **caractérisé en ce qu'**entre le support de disques intérieurs (17) et le trou traversant (38) est disposé un dispositif d'étanchéité (50 ; 140).

2. Dispositif de transfert de couple selon la revendication 1, **caractérisé en ce que** le dispositif d'étanchéité (50 ; 140) comprend une bague d'étanchéité (51 ; 142) qui chevauche une interface entre le support de disques intérieurs (17) et le paquet de disques (11) dans la direction radiale.

3. Dispositif de transfert de couple selon la revendication 2, **caractérisé en ce que** la bague d'étanchéité (51) présente, au moins en partie, une section transversale essentiellement en forme de L, de U, ou de C.

4. Dispositif de transfert de couple selon la revendication 2 ou 3, **caractérisé en ce que** la bague d'étanchéité (51), considérée en section transversale, présente une branche (52) qui est disposée dans la direction radiale entre la bague de pression (36) et un ou le support de disques extérieurs (24) d'un ou du deuxième embrayage à disques (4), qui est disposé radialement à l'intérieur du premier embrayage à disques (3).

5. Dispositif de transfert de couple selon la revendication 2 ou 3, **caractérisé en ce que** la bague d'étanchéité (51), considérée en section transversale, présente une branche (52) qui est disposée de manière décalée dans la direction axiale vers le support de disques intérieurs (17) et radialement à l'extérieur de ce dernier.

6. Dispositif de transfert de couple selon la revendication 4 ou 5, **caractérisé en ce que** l'extrémité de la branche (52) est disposée entre le support de disques intérieurs (17) et un disque associé (81).

7. Dispositif de transfert de couple selon l'une quelconque des revendications 2 à 6, **caractérisé en ce que** la bague d'étanchéité (51), considérée en section transversale, présente une autre branche qui est disposée de manière décalée dans la direction axiale vers le support de disques intérieurs (17) et radialement à l'intérieur de ce dernier.

8. Dispositif de transfert de couple selon l'une quelconque des revendications précédentes, **caractérisé en ce que** le dispositif d'étanchéité (50) est réalisé sous forme de fixation pour le transport.

9. Dispositif de transfert de couple selon l'une quelconque des revendications précédentes, **caractérisé en ce que** le dispositif d'étanchéité (50) comprend une fixation d'installation.

10. Dispositif de transfert de couple selon la revendication 9, **caractérisé en ce que** la fixation d'installation comprend un dispositif d'encliquetage, qui provoque un encliquetage du dispositif d'étanchéité (50) lors de son installation.

11. Dispositif de transfert de couple selon la revendication 9, **caractérisé en ce que** la fixation d'installation est réalisée sous forme de fermeture à baïonnette.

12. Dispositif de transfert de couple selon l'une quelconque des revendications précédentes, **caractérisé en ce que** le dispositif d'étanchéité (50), en particulier la bague d'étanchéité, présente au moins un ergot (54), un crochet et/ou une branche qui s'étend au moins en partie radialement vers l'intérieur et qui vient en prise dans un évidement, un trou traversant ou une rainure (55), qui est prévu(e) dans un ou dans le support de disques extérieurs (24) d'un ou du deuxième embrayage à disques (4) qui est disposé radialement à l'intérieur du premier embrayage à disques (3).

13. Dispositif de transfert de couple selon la revendication 12, **caractérisé en ce que** l'ergot (54), le crochet ou la branche est précontraint de manière élastique.

14. Dispositif de transfert de couple selon l'une quelconque des revendications 2 à 13, **caractérisé en ce que** la bague d'étanchéité (51) est précontrainte élastiquement.

15. Dispositif de transfert de couple selon l'une quelconque des revendications précédentes, **caractérisé en ce que** le dispositif d'étanchéité (50) est réalisé de telle sorte que le mouvement d'ouverture de l'embrayage à disques (3) soit supporté par le dispositif d'étanchéité.

16. Dispositif de transfert de couple selon l'une quelconque des revendications précédentes, **caractérisé en ce que** le dispositif d'étanchéité (50) est réalisé de telle sorte que le dispositif d'étanchéité (50) n'exerce sa fonction d'étanchéité que lorsque l'embrayage à disques (3) est fermé.

17. Dispositif de transfert de couple selon l'une quelconque des revendications précédentes, **caractérisé en ce que** le dispositif d'étanchéité (50) est estampé et/ou façonné en tôle.

18. Dispositif de transfert de couple selon l'une quelconque des revendications 1 à 16, **caractérisé en ce que** le dispositif d'étanchéité (140) est formé de plastique.

19. Dispositif de transfert de couple selon la revendication 18, **caractérisé en ce que** le dispositif d'étanchéité (140) présente au moins un crochet d'encliquetage (145, 147, 148) qui vient en prise dans une ouverture (146) du dispositif de support (30).

20. Dispositif de transfert de couple selon l'une quelconque des revendications précédentes, **caractérisé en ce que** la bague de pression (36) présente des moyens de centrage.

21. Dispositif de transfert de couple selon la revendication précédente, **caractérisé en ce que** la bague de pression (36) présente, en particulier radialement à l'intérieur, des ergots avec des faces latérales qui servent à centrer la bague de pression.

22. Dispositif de transfert de couple selon la revendication 20, **caractérisé en ce que** la bague de pression (36) présente, en particulier radialement à l'extérieur, des dents (102) avec des flancs qui servent à centrer la bague de pression (36).

23. Dispositif de transfert de couple selon l'une quelconque des revendications 20 à 22, **caractérisé en ce que** la bague de pression (36) présente une région de bord cintrée (91), de préférence radialement à l'extérieur.

24. Chaîne cinématique d'un véhicule automobile comprenant un dispositif de transfert de couple selon l'une quelconque des revendications précédentes.
